# EUROPEAN PATENT APPLICATION

(11) **EP 2 653 959 A1**
(43) Date of publication of application: **23.10.2013**
(21) Application number: 12164240.9
(22) Date of filing: 16.04.2012
(51) Int. Cl.: G06F 3/048, G06F 3/023

(54) **Method of changing input states**

(71) Applicant: BlackBerry Limited, Waterloo, ON N2L 3W8 (CA)
(72) Inventor: Griffin, Jason Tyler, Waterloo, Ontario N2L 3W8 (CA); Hamilton, Alistair Robert, Waterloo, Ontario N2L 3W8 (CA); Pasquero, Jerome, Waterloo, Ontario N2L 3W8 (CA); McKenzie, Donald Somerset, Waterloo, Ontario N2L 3W8 (CA)
(74) Representative: Patel, Binesh

(57) **Abstract**

A method of changing input states on an electronic device is disclosed. The method includes displaying a virtual keyboard on a touch-sensitive display, wherein the virtual keyboard includes a first input character set when the device is in a first input state; and transitioning the device to a second input state when touch input corresponding to a predefined gesture is detected when the device is in the first input state, wherein in the second input state, the virtual keyboard includes a second input character set.

## Description

### RELATED APPLICATION DATA

The present disclosure relates to commonly owned U.S. patent application no. 13/373,356, filed November 10, 2011, which is incorporated herein by reference in its entirety.

### TECHNICAL FIELD

The present disclosure relates generally to input methodologies for electronic devices, such as handheld electronic devices, and more particularly, to methods for changing input states for electronic devices.

### BACKGROUND

Increasingly, electronic devices, such as computers, netbooks, cellular phones, smart phones, personal digital assistants, tablets, etc., have touch-sensitive displays that allow a user to input characters into an application, such as a word processor or email application. Character input on touch-sensitive displays can be a cumbersome task due to, for example, the small touch-sensitive display area and the limited input character set which can be displayed on the display.

### BRIEF DESCRIPTION OF THE DRAWINGS

Fig. 1 is an example block diagram of an electronic device, consistent with embodiments disclosed herein.

Fig. 2 is a flowchart illustrating an example method for predicting a selected set of characters, consistent with embodiments disclosed herein.

Figs. 3A, 3B, 3C, and 3D show example front views of a touch-sensitive display, consistent with embodiments disclosed herein.

Figs. 4A and 4B show example front views of a touch-sensitive display, consistent with embodiments disclosed herein.

Fig. 5 shows an example front view of a touch-sensitive display, consistent with embodiments disclosed herein.

Figs. 6A, 6B, and 6C show example front views of a touch-sensitive display, consistent with embodiments disclosed herein.

Fig. 7 shows an example front view of a touch-sensitive display, consistent with embodiments disclosed herein.

Figs. 8A and 8B show example front views of a touch-sensitive display, consistent with embodiments disclosed herein.

Fig. 9 shows an example front view of a touch-sensitive display, consistent with embodiments disclosed herein.

Figs. 10A and 10B show example front views of a touch-sensitive display, consistent with embodiments disclosed herein.

Figs. 11A and 11B show example front views of a touch-sensitive display, consistent with embodiments disclosed herein.

Figs. 12A and 12B show example front views of a touch-sensitive display, consistent with embodiments disclosed herein.

Figs. 13A and 13B show example front views of a touch-sensitive display, consistent with embodiments disclosed herein.

Figs. 14A, 14B, and 14C show example front views of a touch-sensitive display, consistent with embodiments disclosed herein.

Fig. 15 shows an example front view of a touch-sensitive display, consistent with embodiments disclosed herein.

Fig. 16 shows an example front view of a touch-sensitive display, consistent with embodiments disclosed herein.

Fig. 17 is a flowchart illustrating an example method, consistent with embodiments disclosed herein.

Fig. 18 is a flowchart illustrating an example method, consistent with embodiments disclosed herein.

Fig. 19 is a flowchart illustrating an example method, consistent with embodiments disclosed herein.

Fig. 20 shows an example front view of a virtual keyboard for display on a touch-sensitive display, consistent with embodiments disclosed herein.

Figs. 21 to 23 show example front views of a virtual keyboard for display on a touch-sensitive display, consistent with embodiments disclosed herein.

Fig. 24 is a flowchart illustrating an example method, consistent with embodiments disclosed herein.

Figs. 25A-C and 26A-C show an example key of a virtual keyboard, consistent with embodiments disclosed herein.

Figs. 27-29 are flowcharts illustrating example methods, consistent with embodiments disclosed herein.

Figs. 30A-34 show example visual cues for transitioning a virtual keyboard, consistent with embodiments disclosed herein.

### DESCRIPTION OF EXAMPLE EMBODIMENTS

Reference will now be made in detail to various embodiments, examples of which are illustrated in the accompanying drawings. Wherever possible, the same reference numbers will be used throughout the drawings to refer to the same or like parts.

The present disclosure relates to an electronic device, including wired communication devices (for example, a laptop computer having a touch-sensitive display) and mobile or handheld wireless communication devices such as cellular phones, smartphones, wireless organizers, personal digital assistants, wirelessly enabled notebook computers, tablets, and similar devices. The electronic device can also be an electronic device without wireless communication capabilities, such as a handheld electronic game device, digital photograph album, digital camera, or other device.

Basic predictive text input solutions have been introduced for assisting with input on an electronic device. These solutions include predicting which word a user is entering and offering a suggestion for completing the word. But these solutions can have limitations, often requiring the user to input most or all of the characters in a word before the solution suggests the word the user is trying to input. Even then, a user often has to divert focus from the keyboard to view and consider the suggested word displayed elsewhere on the display of the electronic device, and thereafter, look back at the keyboard to continue typing. Refocusing of one's eyes relative to the keyboard while inputting information in an electronic device, particularly when composing large texts, can strain the eyes and be cumbersome, distracting, and otherwise inefficient. Moreover, processing cycles are lost and display power wasted as the processor is idling while the user is focusing attention to the input area, and then back at the virtual keyboard.

The efficiency of predictive text input solutions, from the perspective of both device resources and user experience, sometimes depends on the particular user and the nature of the interaction of the particular user with the touch-sensitive display. Virtual keyboard usage patterns can be broadly categorized as being of two types: "rapid" and "precise". Rapid typists are typically fast two-thumb typists which rely on auto-correction. This usage pattern corresponds most closely with experienced, frequent touch-sensitive display users. Precise typists are typically careful typists who are inclined to use a single finger point to tap keys in the virtual keyboard, and often choose predictions as an input accelerator rather than auto-correction. This usage pattern corresponds most closely with novice/new touch-sensitive display users as well as potentially one-handed (thumb) use situations.

Accordingly, example embodiments described herein permit the user of an electronic device to input characters without diverting attention from the keyboard and subsequently refocusing. Example embodiments described herein also seek to accommodate different user types, such as rapid typists and precise typists, and the different efficiency challenges presented by the different user types.

Use of the indefinite article "a" or "an" in the specification and the claims is meant to include one or more than one of the feature that it introduces, unless otherwise indicated. Thus, the term "a set of characters" as used in "generating a set of characters" can include the generation of one or more than one set of characters. Similarly, use of the definite article "the", or "said," particularly after a feature has been introduced with the indefinite article, is meant to include one or more than one of the feature to which it refers (unless otherwise indicated). Therefore, the term "the generated set of characters" as used in "displaying the generated set of characters" includes displaying one or more generated set of characters. References to orientation contained herein, such as horizontal and vertical, are relative to the screen orientation of a graphical user interface rather than any physical orientation.

In one embodiment, a method is provided that comprises receiving an input of a character from a virtual keyboard rendered on a display; generating one or more sets of predicted input characters based on the input character; and displaying one or more of the generated sets of predicted input characters.

In another embodiment, a method of changing input states on an electronic device is provided. The method includes: displaying a virtual keyboard on a touch-sensitive display, wherein the virtual keyboard includes a first input character set when the device is in a first input state; transitioning the device to a second input state when touch input corresponding to a predefined gesture is detected when the device is in the first input state, wherein in the second input state, the virtual keyboard includes a second input character set.

In a further embodiment, an electronic device is provided that comprises a display having a virtual keyboard rendered thereupon, and a processor. The processor can be configured to perform methods described herein.

In a further embodiment, a keyboard rendered on a display of an electronic device is provided. The keyboard can include a plurality of keys, each key corresponding to one or more different characters of a plurality of characters. The keyboard is configured to perform methods described herein in response to receiving an input.

In a further embodiment, a non-transitory computer-readable storage medium is provided that includes computer executable instructions for performing methods described herein.

These example embodiments, as well as those described below, permit the user of an electronic device to input a set of characters without diverting attention from the virtual keyboard and subsequently refocusing. Predicting and providing various options that the user is likely contemplating, and doing so at appropriate locations on the keyboard, allows the focus to remain on the keyboard, which enhances efficiency, accuracy, and speed of character input.

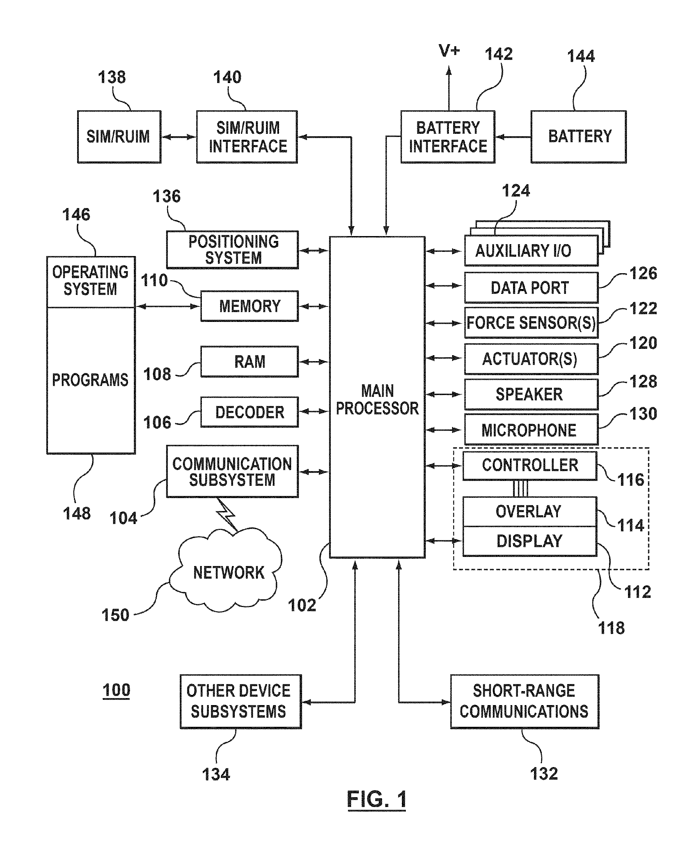

Fig. 1 is a block diagram of an electronic device 100, consistent with example embodiments disclosed herein. Electronic device 100 includes multiple components, such as a main processor 102 that controls the overall operation of electronic device 100. Communication functions, including data and voice communications, are performed through a communication subsystem 104. Data received by electronic device 100 is decompressed and decrypted by a decoder 106. The communication subsystem 104 receives messages from and sends messages to a network 150. Network 150 can be any type of network, including, but not limited to, a wired network, a data wireless network, voice wireless network, and dual-mode wireless networks that support both voice and data communications over the same physical base stations. Electronic device 100 can be a battery-powered device and include a battery interface 142 for receiving one or more batteries 144.

Main processor 102 is coupled to and can interact with additional subsystems such as a Random Access Memory (RAM) 108; a memory 110, such as a hard drive, CD, DVD, flash memory, or a similar storage device; one or more actuators 120; one or more force sensors 122; an auxiliary input/output (I/O) subsystem 124; a data port 126; a speaker 128; a microphone 130; short-range communications 132; other device subsystems 134; and a touch-sensitive display 118.

Touch-sensitive display 118 includes a display 112 with a touch-active overlay 114 connected to a controller 116. User-interaction with a graphical user interface (GUI), such as a virtual keyboard rendered on the display 112 as a GUI for input of characters, or a web-browser, is performed through touch-active overlay 114. Main processor 102 interacts with touch-active overlay 114 via controller 116. Characters, such as text, symbols, images, and other items are displayed on display 112 of touch-sensitive display 118 via main processor 102. Characters are inputted when the user touches the touch-sensitive display at a location associated with said character.

Touch-sensitive display 118 is connected to and controlled by main processor 102. Accordingly, detection of a touch event and/or determining the location of the touch event can be performed by main processor 102 of electronic device 100. A touch event includes in some embodiments, a tap by a finger, a swipe by a finger, a swipe by a stylus, a long press by finger or stylus, or a press by a finger for a predetermined period of time, and the like.

While specific embodiments of a touch-sensitive display have been described, any suitable type of touch-sensitive display for an electronic device can be used, including, but not limited to, a capacitive touchscreen, a resistive touchscreen, a surface acoustic wave (SAW) touchscreen, an embedded photo cell touchscreen, an infrared (IR) touchscreen, a strain gauge-based touchscreen, an optical imaging touchscreen, a dispersive signal technology touchscreen, an acoustic pulse recognition touchscreen or a frustrated total internal reflection touchscreen. The type of touch-sensitive display technology used in any given embodiment will depend on the electronic device and its particular application and demands.

Main processor 102 can also interact with a positioning system 136 for determining the location of electronic device 100. The location can be determined in any number of ways, such as by a computer, by a Global Positioning System (GPS), either included or not included in electric device 100, through a Wi-Fi network, or by having a location entered manually. The location can also be determined based on calendar entries.

In some embodiments, to identify a subscriber for network access, electronic device 100 uses a Subscriber Identity Module or a Removable User Identity Module (SIM/RUIM) card 138 inserted into a SIM/RUIM interface 140 for communication with a network, such as network 150. Alternatively, user identification information can be programmed into memory 110.

Electronic device 100 also includes an operating system 146 and programs 148 that are executed by main processor 102 and are typically stored in memory 110. Additional applications may be loaded onto electronic device 100 through network 150, auxiliary I/O subsystem 124, data port 126, short-range communications subsystem 132, or any other suitable subsystem.

A received signal such as a text message, an e-mail message, or web page download is processed by communication subsystem 104 and this processed information is then provided to main processor 102. Main processor 102 processes the received signal for output to display 112, to auxiliary I/O subsystem 124, or a combination of both. A user can compose data items, for example e-mail messages, which can be transmitted over network 150 through communication subsystem 104. For voice communications, the overall operation of electronic device 100 is similar. Speaker 128 outputs audible information converted from electrical signals, and microphone 130 converts audible information into electrical signals for processing.

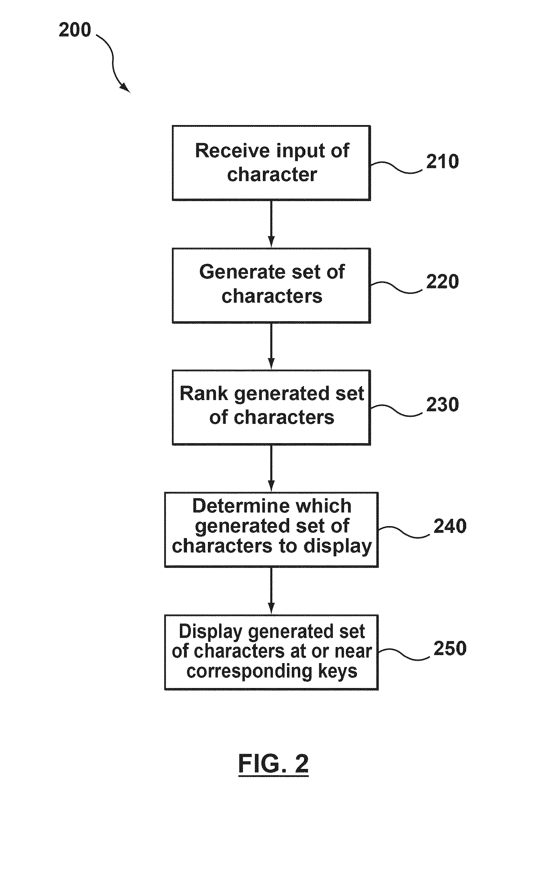

Fig. 2 is a flowchart illustrating an example method 200 for predicting a set of characters, consistent with example embodiments disclosed herein. As used herein, a predictor (such as a predictive algorithm, program or firmware) includes a set of instructions that when executed by a processor (for example, main processor 102), can be used to disambiguate for example, received ambiguous text input and provide various options, such as a set of characters (for example, words or phrases, acronyms, names, slang, colloquialisms, abbreviations, or any combination thereof) that a user might be contemplating. A predictor can also receive otherwise unambiguous text input and predict a set of characters potentially contemplated by the user based on several factors, such as context, frequency of use, and others as appreciated by those skilled in the field.

For example, in the predictor is a program 148 residing in memory 110 of electronic device 100. Accordingly, method 200 includes a predictor for generating a set of characters corresponding to a subsequent candidate input character based on inputted characters. It can be appreciated that while the example embodiments described herein are directed to a predictor program executed by a processor, the predictor can be executed by a virtual keyboard controller.

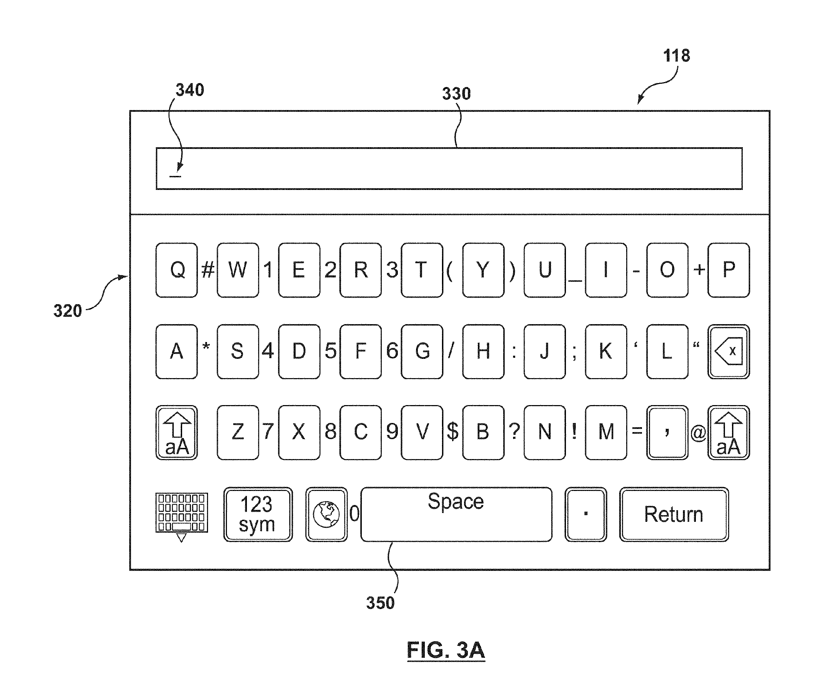

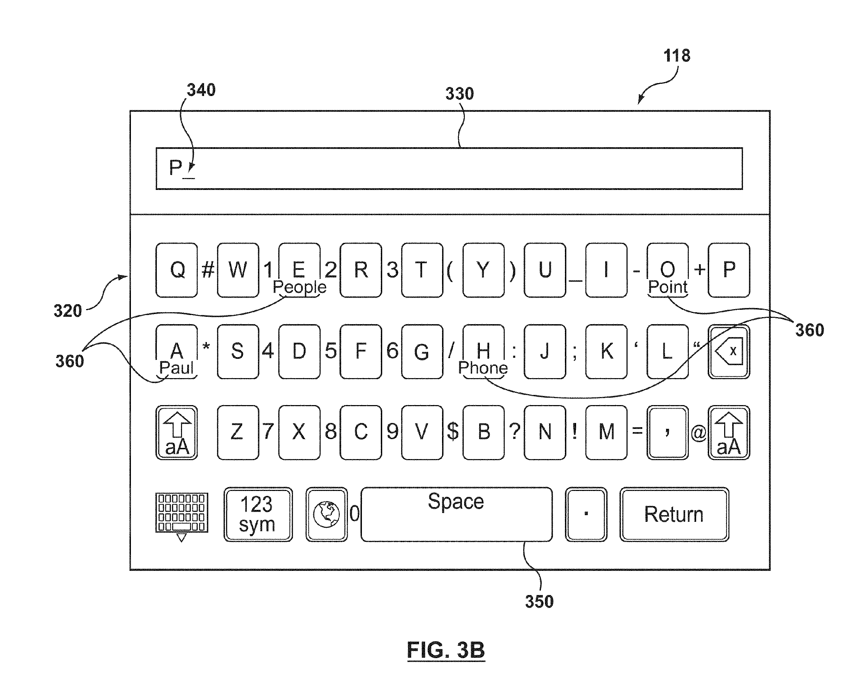

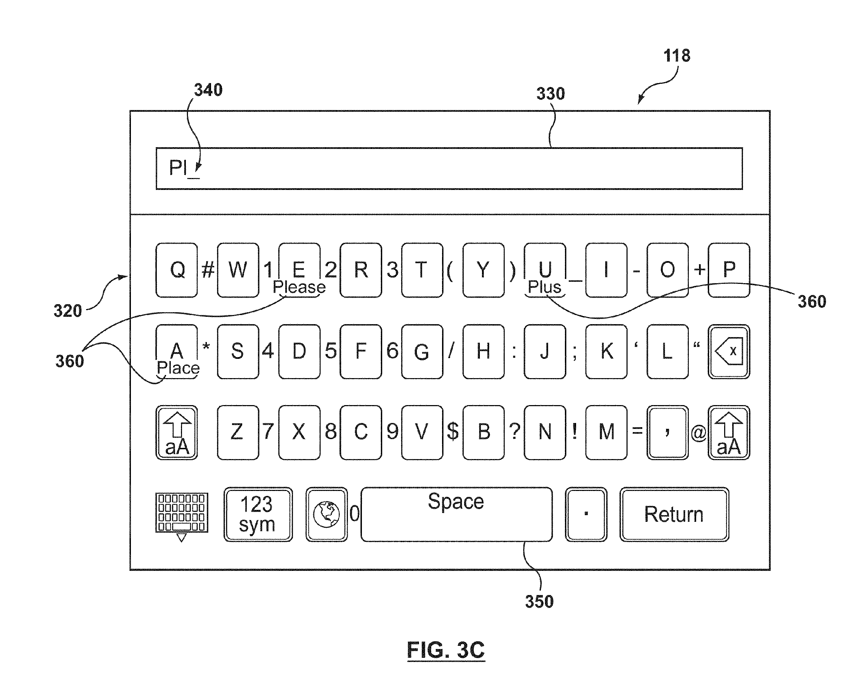

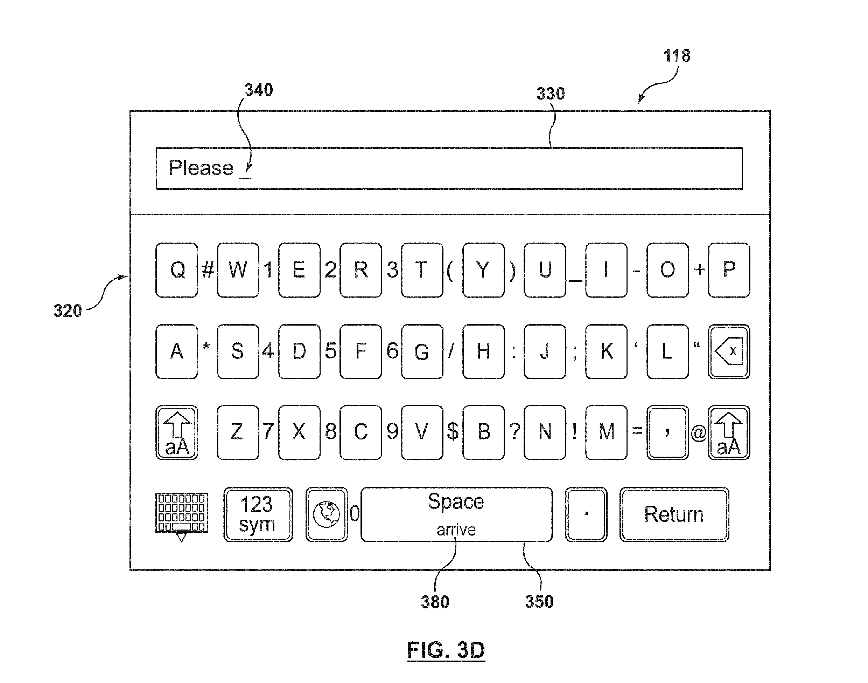

Method 200 begins at block 210, where the processor receives an input of one or more characters from a virtual keyboard displayed on a touch-sensitive display. As used herein, however, a character can be any alphanumeric character, such as a letter, a number, a symbol, a punctuation mark, and the like. The inputted character can be displayed in an input field (for example, input field 330 further described below in Figs. 3-9) that displays the character the user inputs using the virtual keyboard.

At block 220, the processor generates one or more sets of characters such as words or phrases, acronyms, names, slang, colloquialisms, abbreviations, or any combination thereof based on the input received in block 210. The set of characters includes, for example, a set of characters that are stored in a dictionary (for example, a word or an acronym) of a memory of the electronic device, a set of characters that were previously inputted by user (for example, a name or acronym), a set of characters based on a hierarchy or tree structure, a combination thereof, or any set of characters that are selected by a processor based on defined arrangement.

In some embodiments, the processor can use contextual data for generating a set of characters. Contextual data considers the context of characters in the input field. Contextual data can include information about, for example, set of characters previously inputted by the user, grammatical attributes of the characters inputted in the input field (for example, whether a noun or a verb is needed as the next set of characters in a sentence), or any combination thereof. For example, if the set of characters "the" has already been inputted into display, the processor can use the contextual data to determine that a noun-instead of a verb-will be the next set of characters after "the". Likewise, if the set of characters "Guy Lafleur played in the National Hockey" was inputted, based on the context, the processor can determine the subsequent set of characters is likely "League". Using the contextual data, the processor can also determine whether an inputted character was incorrect. For example, the processor can determine that the inputted character was supposed to be a "w" instead of an "a", given the proximity of these characters on a QWERTY virtual keyboard.

Processor 102 can also include an affix as part of the set of characters, such as an adverb ending, an adjective ending, different verb tenses, and the like, or any other change to make a complete set of characters. Processor 102 can also use the received input to generate affixes, such as plural endings or plural forms. Any known predictive technique or software can be used to process the received input and the contextual data in generating set of characters at block 220.

In some example embodiments, the set of characters generated at block 220 can begin with the same character received as input at block 210. For example, if the characters "pl" have been received as input using a virtual keyboard, these characters will be received by the processor as the input. In these embodiments, the set of characters generated at block 220 would all begin with "pl", such as "please" or "plot." There is no limit on the length of a generated set of characters. Regarding affixes, if the user has input the characters "child", for example, the affixes generated at block 220 could include "-ren", to make the set of characters "children", or "-ish", to make the set of characters "childish".

In some example embodiments, the set of characters generated at block 220 can simply include the same characters received as input at block 210. For example, if the received input is an "x," the processor may generate "example" or "xylophone" as the set of characters. Such sets of characters can be generated using the contextual data.

In another example embodiment, if input has not been received or a delimiter (such as a <SPACE>) has been used, the generated set of characters can be placed on subsequent candidate input characters that correspond to the first letter of the generated set of characters.

Next, at block 230, the generated set of characters from block 220 can be ranked. The rankings reflect the likelihood that a candidate set of characters might have been intended by the user, or might be chosen by a user compared to another candidate set of characters.

In some embodiments, contextual data can be included in the ranking at block 230. In some embodiments, the electronic device can be configured to rank nouns or adjectives higher based on the previous inputted set of characters. If the inputted set of characters is suggestive of a noun or adjective, the processor, using the contextual data, can rank the nouns or adjectives corresponding to what the user is typing higher at block 230. In an additional embodiment, set of characters including adjective affixes (such as "-ish" or "-ful"), phrases, plurals, or combinations thereof can also be ranked. Contextual data can increase the likelihood that the higher ranked generated set of characters are intended by a user. In some embodiments, contextual data can include information about which programs or applications are currently running or being used by a user. For example, if the user is running an email application, then set of characters associated with that user's email system, such as set of characters from the user's contact list, can be used to determine the ranking. N-grams, including unigrams, bigrams, trigrams, and the like, can be also used in the ranking of the sets of characters. Alternatively, the geolocation of the electronic device or user can be used in the ranking process. If, for example, the electronic device recognizes that a user is located at his/her office, then sets of characters generally associated with work can be ranked higher in the list. If, on the other hand, the device determines a user is at the beach, then sets of characters generally associated with the beach can be ranked higher in the list.

At block 240, the processor determines which of the set of characters to display based on the ranking. For example, higher ranked sets of characters are more likely to be determined that they should be displayed. A ranker (such as a ranking algorithm, program or firmware) includes a set of instructions that when executed by a processor (for example, main processor 102), can be executed to determine ranking in this regard. In some embodiments, the ranker is a program 146 residing in memory 110 of electronic device 100.

At block 250, the determined set of characters is displayed at a location on the keyboard corresponding to a subsequent candidate input character, predicted as the next character in a word that the user might input. For instance, if a user inputs "pl", the word "please" would be displayed on the key for the letter "e"-the subsequent candidate input character for that word. Similarly, the word "plus" would also be displayed on the key for the letter "u"-another subsequent candidate input character. The subsequent candidate input character can be any alphanumeric character, such as a letter, number, symbol, punctuation mark, and the like.

In some embodiments, the generated set of characters is displayed at or near keys on the virtual keyboard associated with the subsequent candidate input characters. Its placement at or near a key can depend, for instance, on the size of the word or the number of nearby subsequent candidate input characters and the size of their associated set of characters.

The set of characters can be displayed in a manner that will attract the user's attention. In some embodiments, a displayed set of character's appearance can be enhanced or changed in a way that makes the set more readily visible to the user. For example, displayed sets of characters can be displayed with backlighting, highlighting, underlining, bolding, italicizing, using combinations thereof, or in any other way for making the displayed set of characters more visible.

When identifying the set of characters for display at block 240, the processor can limit the displayed set of characters to the top few or choose among the higher ranked sets of characters. For example, if two sets of characters are both ranked high, and these sets of characters would otherwise be displayed at the same key, the electronic device could be configured to display only the highest ranked generated set of characters. In other embodiments, both sets of characters could be displayed at or around the same key, or one set of characters is displayed at one key while the second set of characters is displayed at another key. In some example embodiments, the processor can take into account the display size to limit the number of generated sets of characters.

In some embodiments, the ranking could be used to choose between two or more sets of characters that, when displayed on adjacent subsequent candidate input characters, would overlap with each other (e.g., because of their respective lengths). In such a scenario, the electronic device could be configured to display the higher ranked set of characters on the keyboard. For example, if the set of characters "establishment" is ranked first in a list generated at block 240 after the letter "E" is inputted, "establishment" could be displayed at the "S" key. When displayed on a virtual keyboard, however, its length might occupy some space on the "A" key and the "D" key, potentially blocking a set of characters that would be displayed on or around those keys. At block 240, it could be determined that "establishment" would be displayed fully, and no other set of characters would be placed at the "A" or "D" keys ahead of the first ranked set of characters "establishment." An alternative to displaying only the top ranked set of characters would be to use abbreviations or recognized shortened forms of the set of characters, effectively permitting a long set of characters to be displayed within or mostly within the boundaries of a single key simultaneously with other sets of characters on adjacent keys of a virtual keyboard.

Figures 3-9 illustrate a series of example front views of the touch-sensitive display 118 having a virtual keyboard 320, consistent with example embodiments disclosed herein. Starting with Fig. 3A, touch-sensitive display 118 includes a virtual keyboard 320 that is touch-active. The position of the virtual keyboard 320 is variable such that virtual keyboard 320 can be placed at any location on touch-sensitive display 118. Touch-sensitive display 118 could be configured to detect the location and possibly pressure of one or more objects at the same time. Touch-sensitive display 118 includes two areas: (1) an input field 330 that displays characters after a user has inputted those characters and (2) the virtual keyboard 320 that receives the input from the user. As described throughout this disclosure, a virtual keyboard displays a set of characters at a location on the keyboard corresponding to a subsequent candidate input character that might be received as input from the user.

The examples and embodiments illustrated in Figures 3-9 can be implemented with any set of characters, such as words, phrases, acronyms, names, slang, colloquialisms, abbreviations, or any combination thereof.

As shown in Fig. 3A, touch-sensitive display 118 displays a standard QWERTY virtual keyboard 320; however, any conventional key configuration can be displayed for use in the device, such as AZERTY, QWERTZ, or a layout based on the International Telecommunication Union (ITU) standard (ITU E.161) having "ABC" on key 2, "DEF" on key 3, and so on. Virtual keyboard 320 includes space key 350 as well as other keys that can provide different inputs, such as punctuation, letters, numbers, enter or return keys, and function keys. While virtual keyboard 320 is shown as having a square shape, it can have any other shape (such as an arch).

As shown in Fig. 3A, touch-sensitive display 118 displays input field 330, which displays the characters the user inputs using virtual keyboard 320. Input field 330 includes a cursor 340, which can be an underscore (as shown) or any other shape, such as a vertical line. Cursor 340 represents the character space where a next inputted character, selected character, or selected set of characters will be inserted.

As shown in Fig. 3B, when a user inputs a character (in this example, "P"), this character is displayed in input field 330 and cursor 340 moves to the character space where the next inputted character or word will be inserted. After the character is inputted, a predictor (such as, a predictive algorithm or a circuit) can generate set of characters 360 (for this embodiment) that all begin with the character "P", or characters if more than one character is input. The generated set of characters are displayed at a location on the keyboard corresponding to a subsequent candidate input character that might be received as input from the user. As mentioned, generated set of characters 360 can be displayed at or near the key corresponding to the subsequent candidate input characters (for example, under the respective A, E, H, and O keys of the virtual keyboard 320). Indeed, slightly shifting the display location of the generated set of characters can address overcrowding of subsequent candidate input characters, effectively permitting more set of characters to be displayed.

In the example shown in Fig. 3B, "P" is received as input and a predictor generates several set of characters 360, which are displayed at keys corresponding to each generated set of characters' subsequent candidate input character. As shown in Fig. 3B, "People" is placed at the "E" key because the next letter after "P" of "People" is "E"; "Paul" will be place at the "A" key because the next letter after "P" of "Paul" is "A"; "Phone" will be placed at the "H" key because the next letter after "P" of "Phone" is "H"; and so on. It should be noted that any of the letters in the set of characters can be upper case or lower case.

In the embodiment shown in Fig. 3C, "L" is next input received by touch-sensitive display, and a predictor determines several generated set of characters 360, which are displayed at a key corresponding to subsequent candidate input characters (for example, under the respective A, E, and U keys of the virtual keyboard 320), for the current position of cursor 340, which is in the third character position, as shown in input field 330. In another embodiment, a generated set of characters 360 can be presented such as to include the subsequent candidate input character. For example, the set of characters "Please" can be displayed so that the characters "PI" are displayed before the "E" character on the "E" key, and the characters "ase" can be placed after the "E" character on the "E" key. Further, in this or other embodiments, the displayed "E" can be presented in a manner that differs from the "PI" and "ase", thereby enabling the user to still recognize it as the "E" key while also making it readily visible so that the user can either input the generated set of characters "Please" or input the character "E". The "E" can be capitalized or in lowercase. In other embodiments, an affix can be displayed at the key. Using the example of the set of characters "Please" above, the "ase" could be displayed at the "E" key so the set of characters fragment "-ease" or "-Ease" would appear.

If the user inputs a generated set of characters, that set of characters is placed in input field 330. This can be seen in Fig. 3D, where the user has inputted generated set of characters "Please," resulting in its placement in the input field. A space is inserted after the set of characters if the user wants to input a new set of characters. A user could input a generated set of characters in various ways, including in a way that differs from a manner of inputting a character key. For example, to input a generated set of characters, a user could use a finger or stylus to swipe the generated set of characters. As used herein, swiping includes swiping the set of characters itself or swiping or touching near the set of characters. For the latter embodiment, the device can detect a swipe or touch near a set of characters, be it a generated set of characters or a predicted set of characters (to be described below), and through the use of a predictor, determine the set of characters the user intended to input. In another embodiment, the user could press a key for a predetermined period of time, such as a long press. That key can be, for example, the key corresponding to the subsequent candidate input character of the set of characters. So, if the set of characters "Please" is intended to be inputted instead of "E", the electronic device 100 can be configured to require that the "E" key be pressed for a predetermined period of time to trigger the input of "Please".

After a generated set of characters 360 has been determined, as shown in Fig. 3D, a predicted set of characters 380 can be displayed, shown here at space key 350. Predicted set of characters 380 can differ from generated set of characters 360 (as shown in Figs. 3A-3C) and is the system's attempt to predict the next set of characters a user might be contemplating. A predictor is used to determine predicted set of characters 380. As with displayed generated set of characters 360, predicted set of characters 380 can be received as input in any number of ways, including receiving a swiping of the predicted set of characters with a finger or stylus or receiving a pressing of a key (such as the space key or another designated key) for a predetermined period of time (long press).

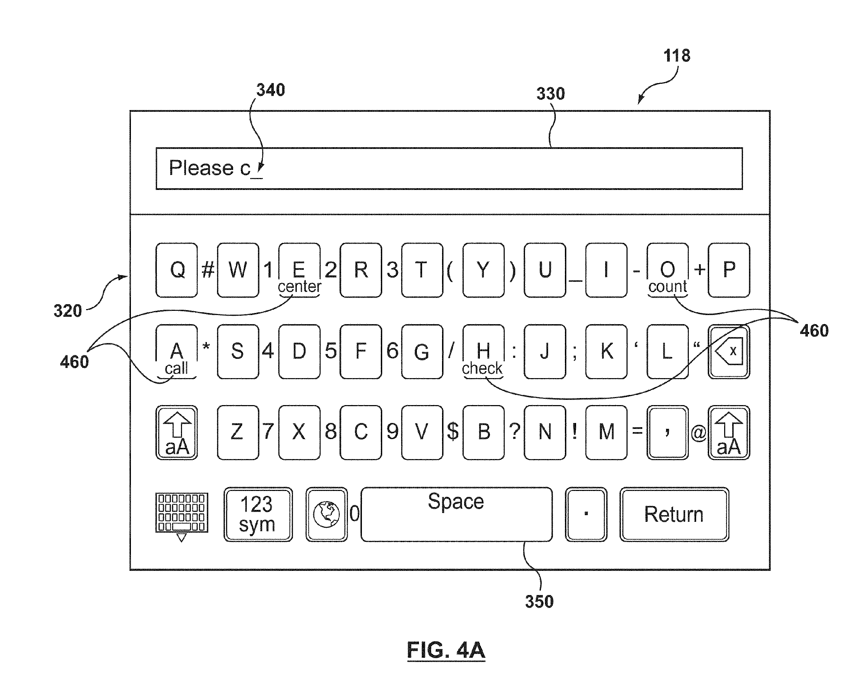

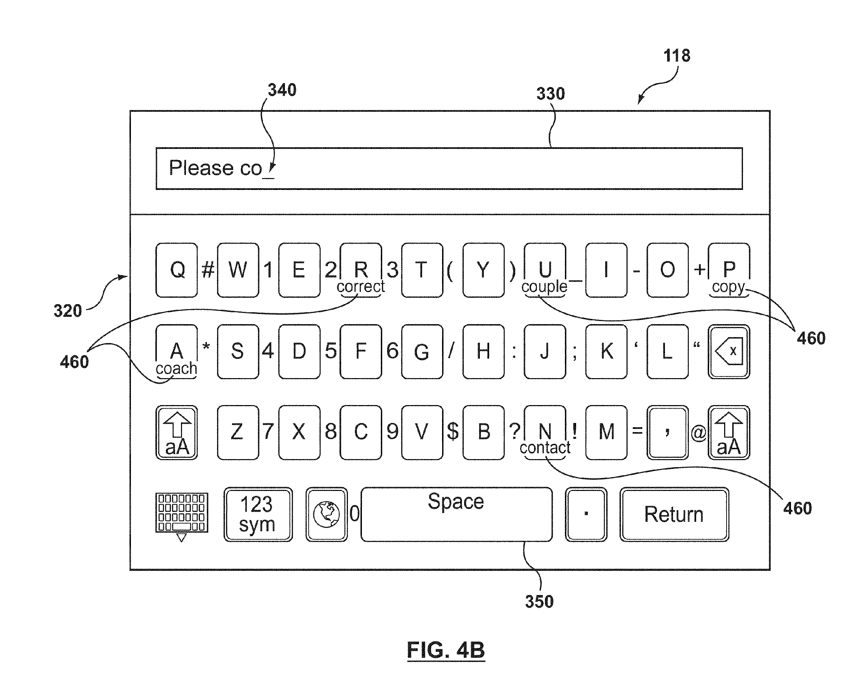

In Fig. 4A, electronic device 100 receives "C" as input from virtual keyboard 320. Again, a predictor determines generated set of characters 460 based in part on the received input. In Fig. 4B, electronic device 100 receives "O" as input from the virtual keyboard and outputs the "O" in input field 330. As shown in Fig. 4A, the set of characters "count" was displayed at the "O" key after the input of the "C" character was received. Since the "O" key was pressed in a manner to only input the "O" character, as shown in Fig. 4B, an "O" is displayed as second character of the currently inputted set of characters, and the set of characters "count" is not inputted by the user. Alternatively, if a user wanted to input the generated set of characters "count," the user can input the "O" key in Fig. 4A in a manner different from a manner of inputting the "O" key, such as by swiping the set of characters "count" or by a long press on the "O" key, as opposed to tapping. Returning to Fig. 4B, after the "O" is inputted, generated set of characters 460 are displayed at the keys corresponding to subsequent candidate input characters, as shown in Fig. 4B.

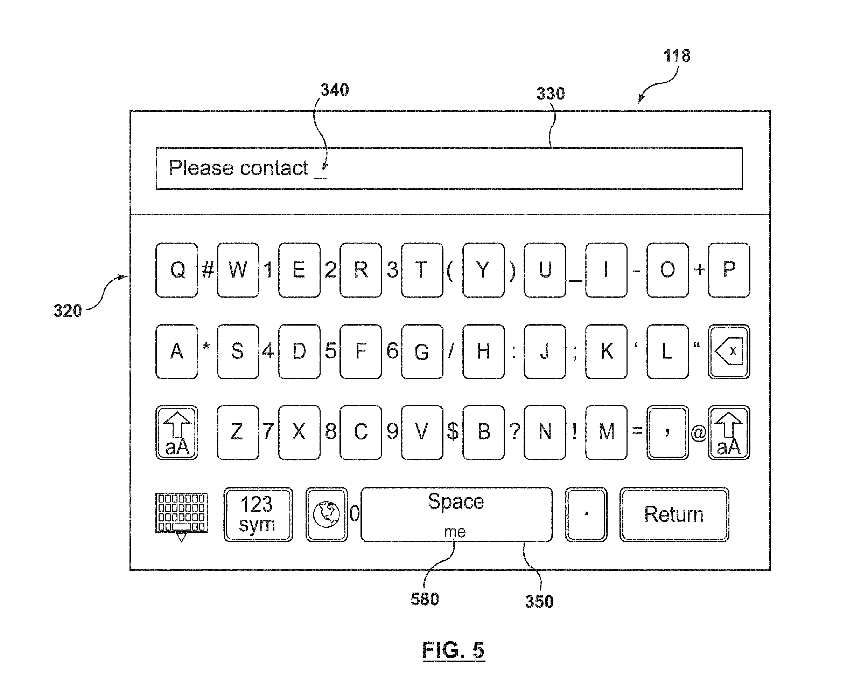

Fig. 5 shows input field 330 displaying the set of characters "contact" followed by a space. In that instance, the user inputted the generated set of characters "contact" 460 as was shown in Fig. 4B at the "N" key. Referring back to Fig. 5, a <SPACE> character is now automatically inserted after the generated word in the input field. Predicted word "me" 580 is now displayed on space key 350.

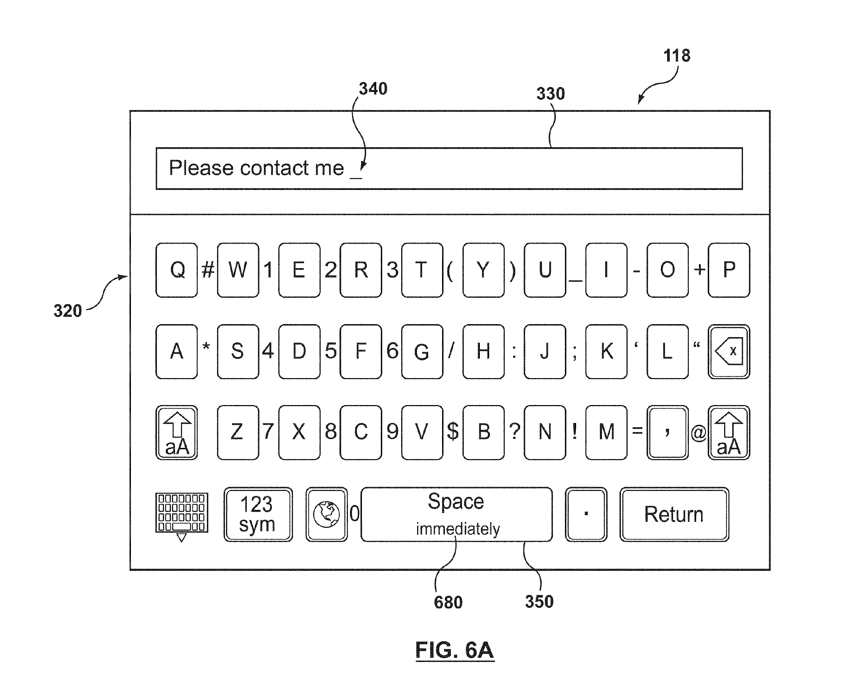

If the predicted word "me" 580 is received as input, the word "me" 580 is then displayed in input field 330 followed by a space as shown in Fig. 6A, which then shows predicted word 680 "immediately" displayed on space key 350. The predicted word is presented after a completed word and space have been displayed in input field 330.

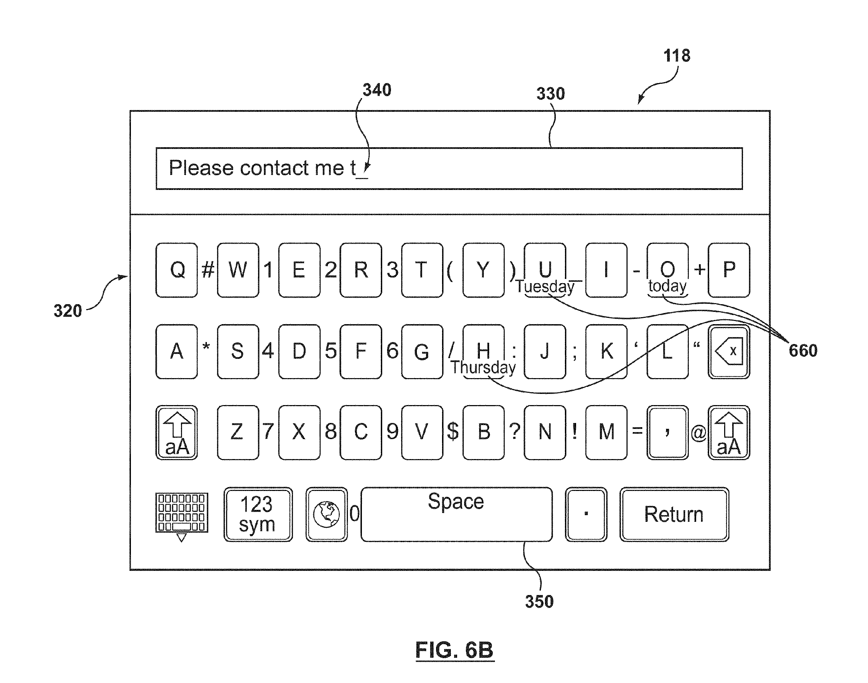

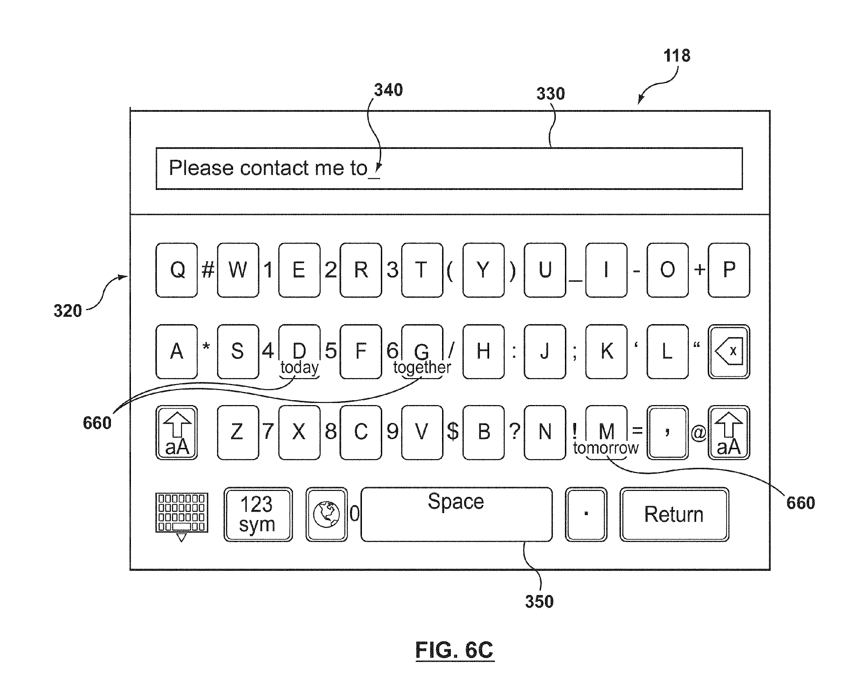

Fig. 6B shows an example where touch-sensitive display 118 has received the "T" character as input after the user has pressed the "T" key. In this scenario, touch-sensitive display 118 displays a "t" in input field 330. Generated set of characters 660 (for example, "Tuesday," "today," and "Thursday") are displayed at the keys of the subsequent candidate input characters. Fig. 6C shows an example where electronic device 100 has received the "o" character as input after the user presses the "O" key instead of inputting generated set of characters 660 "today" as was shown in Fig. 6B. Thus, "o" is now displayed in input field 330.

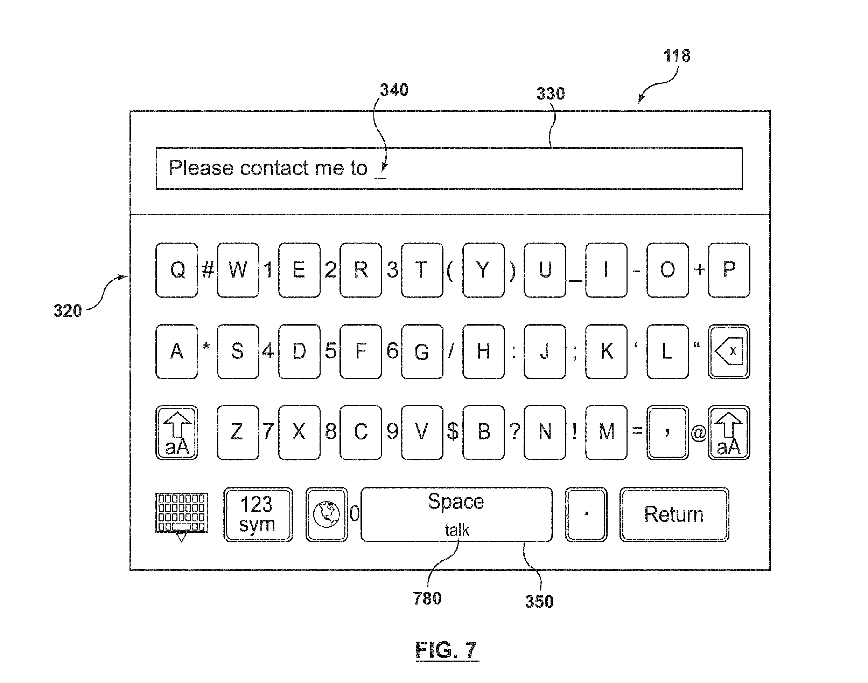

Fig. 7 shows an example where touch-sensitive display 118 has received the <SPACE> character as input after the user selects the space key. In this scenario, touch-sensitive display 118 inserts a <SPACE> character, and then displays predicted set of characters "talk" 780 at space key 350.

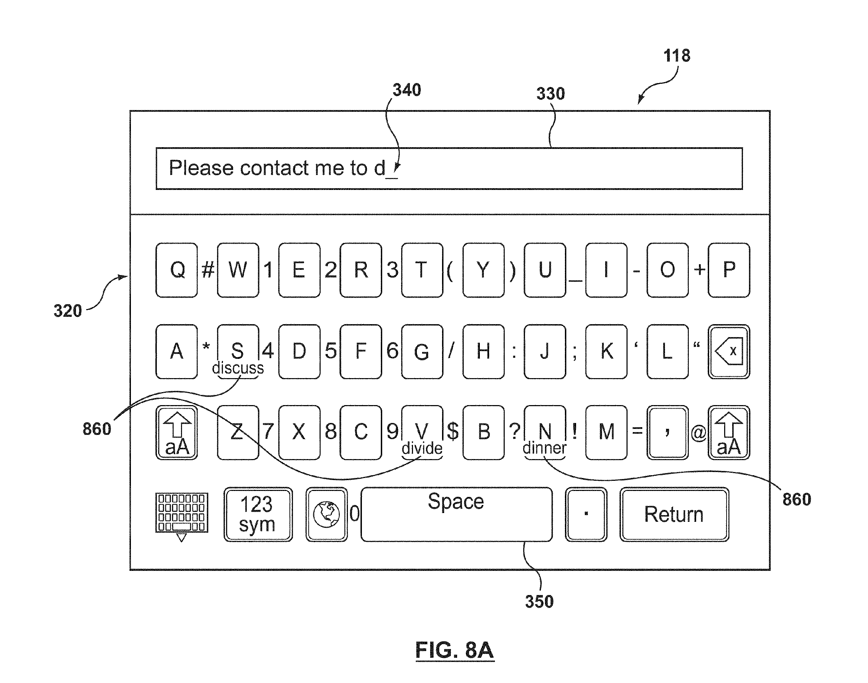

Fig. 8A shows an example where touch-sensitive display 118 has received the "d" character as input after the user presses the "D" key. In this scenario, touch-sensitive display 118 displays a "d" in the input field 330 and displays generated set of characters "discuss," "divide," and "dinner" 860 on keys corresponding to subsequent candidate input characters. In this example embodiment, while the character "I" was never received as input, electronic device 100 determined that generated set of characters "discuss," "divide," and "dinner" 860 were the set of characters to be displayed on touch-sensitive display. In this embodiment, because each of these set of characters has "i" as its second letter, touch-sensitive display 118 displayed generated set of characters using a further subsequent letter in the set of characters (for example, "discuss" under the "S" key, "divide" under the "V" key, and "dinner" under the "N" key). In other embodiments, generated set of characters "discuss," "divide," and "dinner" 860 can be displayed at or near the "I" key.

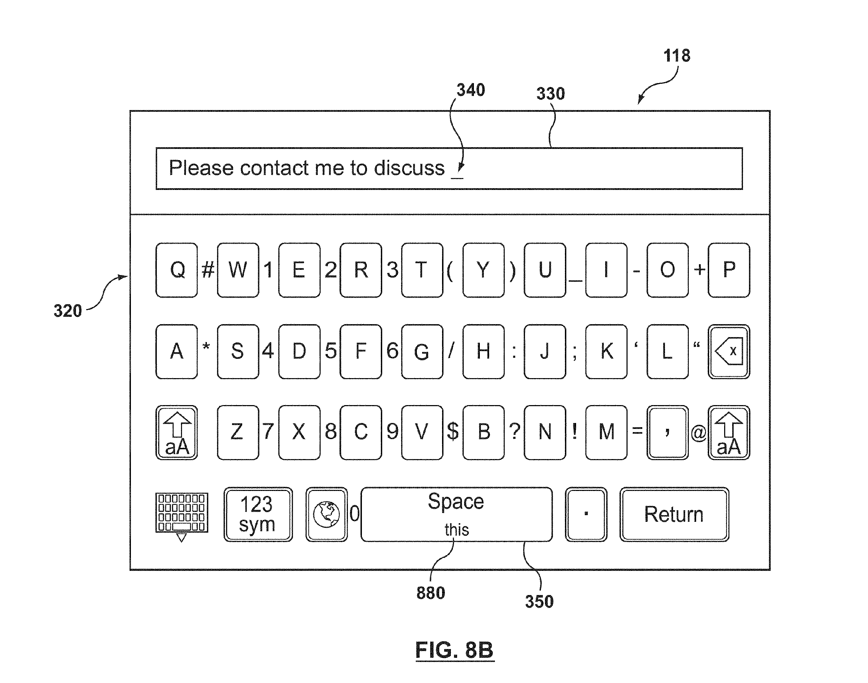

Fig. 8B shows an example where touch-sensitive display 118 has received the set of characters "discuss" as input after the user chooses generated set of characters "discuss" 860. In this example, touch-sensitive display 118 displays predicted set of characters "this" 880 at space key 350.

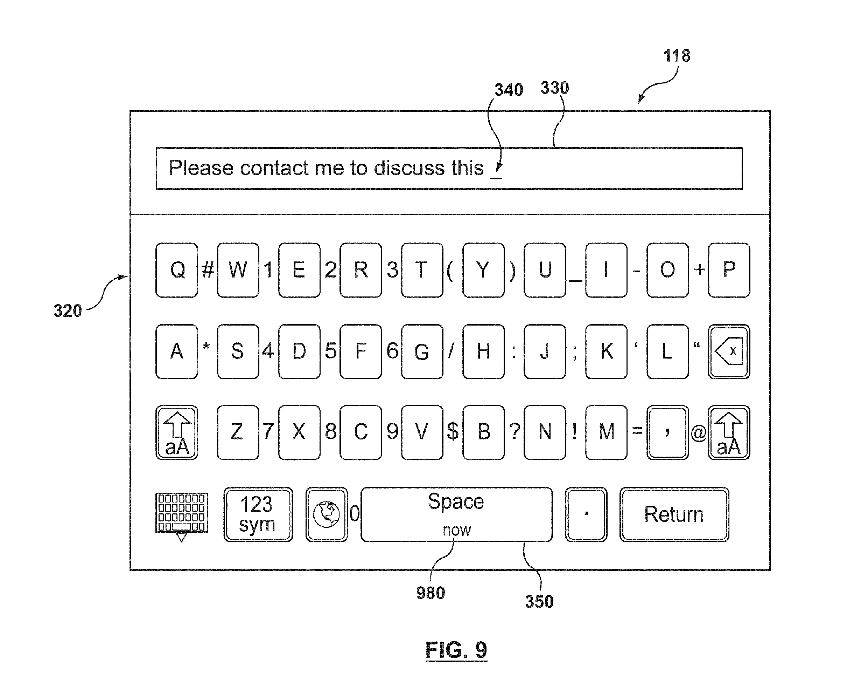

Fig. 9 shows an example where touch-sensitive display 118 receives the "this" set of characters as input after user selects "this" as a desired predicted set of characters 880. In this example, touch-sensitive display 118 displays predicted set of characters "now" 980 at space key 350.

Touch-sensitive display 118 can also receive punctuation as input at any time during the typing of a message. If a user decides to use punctuation after inputting either a generated set of characters or a predicted set of characters, the <SPACE> character (for example, the <SPACE> character prior to cursor 940 of Fig. 9) is deleted and the inputted punctuation is inserted.

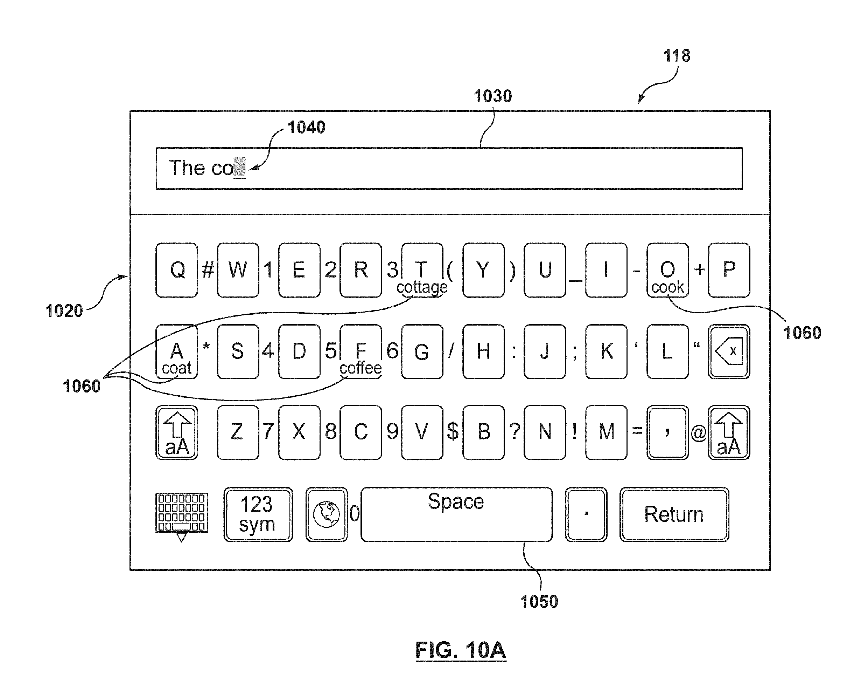

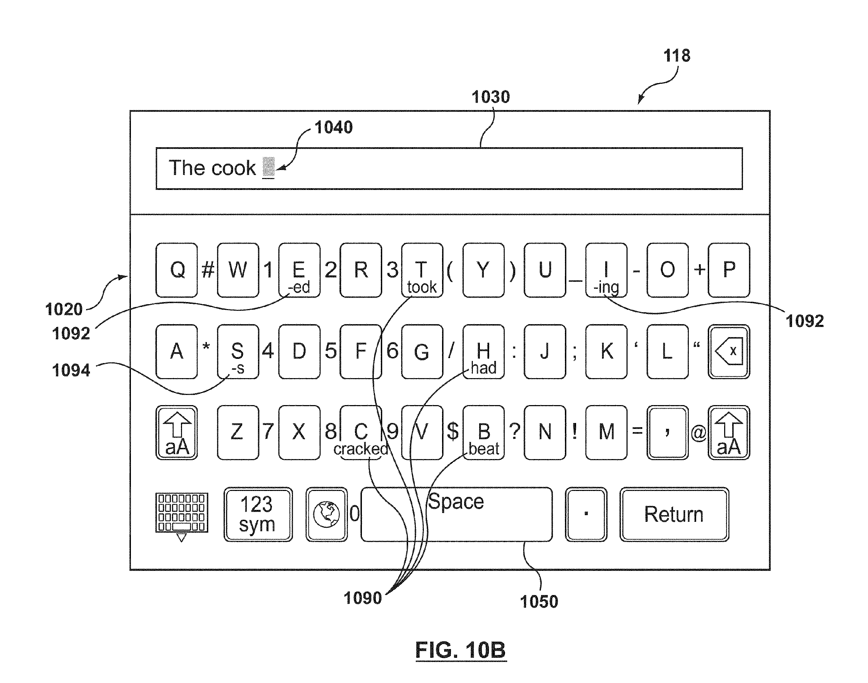

Figs. 10A and 10B show example front views of a touch-sensitive display, consistent with embodiments disclosed herein. Fig. 10A shows an example where touch-sensitive display 118 displays "The co" in a text bar 1030 and several generated set of characters 1060 are displayed at subsequent candidate input characters. In this example, touch-sensitive display 118 displays generated set of characters "cottage" 1060 under the "T" key, generated set of characters "cook" 1060 under the "O" key, generated set of characters "coat" 1060 under the "A" key, and generated set of characters "coffee" 1060 under the "F" key.

Fig. 10B shows an example where touch-sensitive display 118 receives the set of characters "cook" as input after the user has selected the generated set of characters 1060 "cook." The set of characters "cook" is inserted into input field 1030 along with a <SPACE> character. In this example, set of characters include new predicted set of characters (such as words 1090, affixes 1092 (for example, "-ed" under the "E" key and "-ing" under the "I" key), and plurals 1094 (for example, "-s" under the "S" key)), all of which are displayed at subsequent candidate input characters. Each predicted word 1090, affix 1092, or plural 1094 is located on respective subsequent candidate input characters that match the first letter of the predicted word 1090, affix 1092, or plural 1094. Now the user has the added option of inputting a predicted set of characters 1090, 1092, and 1094. Input is made in the same manner as described above. In some embodiments, when touch-sensitive display 118 receives either affix 1092 or plural 1094 as an input, the <SPACE> character between cursor 1040 and "cook" is deleted and the corresponding inputted affix or plural is added to the end of "cook."

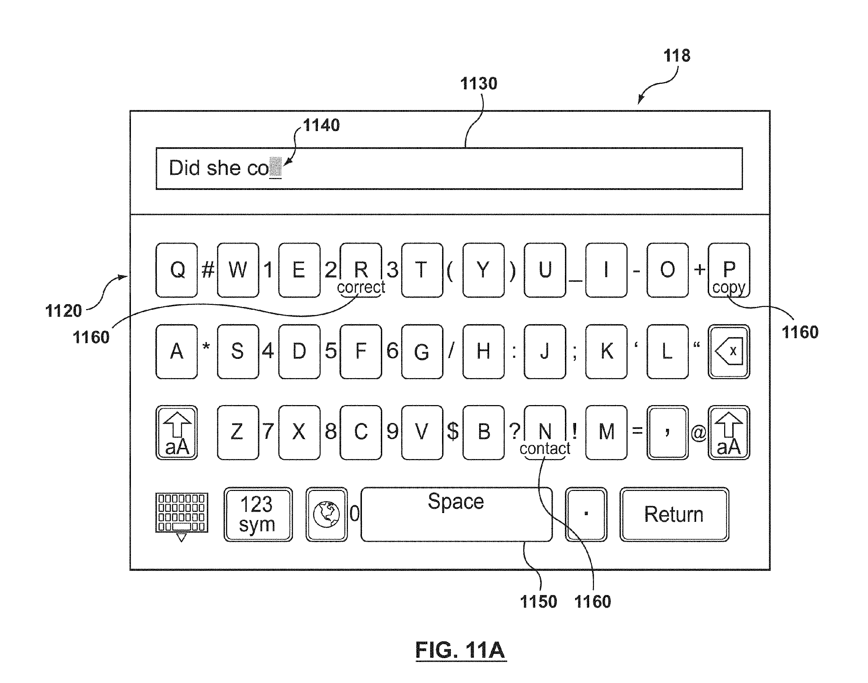

Fig. 11A shows an example where touch-sensitive display 118 displays "Did she co" in a text bar 1130 and several generated set of characters 1160 are displayed at subsequent candidate input characters. In this example, touch-sensitive display 118 displays generated set of characters "correct" 1160 under the "R" key, generated set of characters "copy" 1160 under the "P" key, and generated set of characters "contact" 1160 under the "N" key. While "co" is provided in the text bars of both Fig. 10A and Fig. 11A, touch-sensitive display displays different generated set of characters based on the context of the characters in their respective text bars 1030 and 1130. For example, in Fig. 10A, the characters "co" follows "The," which implies that a noun beginning with "co" should follow. In Fig. 11A, the characters "co" follow a pronoun, which implies that a verb beginning with "co" should follow. As stated above, contextual data can be used to determine when certain set of characters are more appropriate based on, for example, the set of characters in a text bar or previous actions by a user.

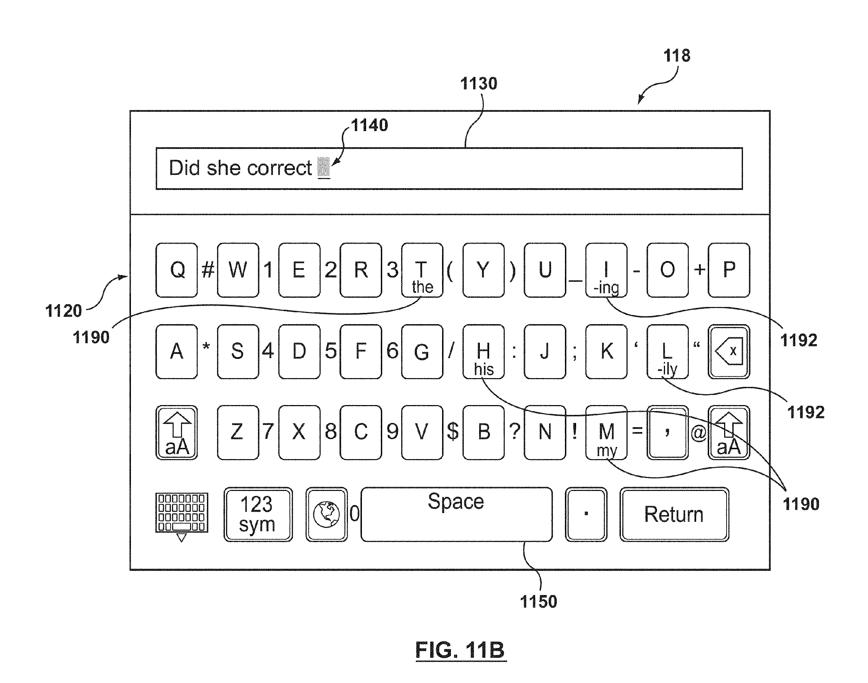

Fig. 11B shows an example where touch-sensitive display 118 receives the set of characters "correct" as input after the user has selected the generated set of characters "correct" 1160. In this example, the set of characters "correct" is inserted in input field 1130 and a <SPACE> character is also inserted. Predicted set of characters (such as words 1190 and affixes 1192) are now displayed at subsequent candidate input characters. In this example, while affixes "-ing" and "-ily" both correspond to the "I" key, touch-sensitive display 118 displays "-ing" with the "I" key and "-ily" with the "L" key. As stated above, the predicted affix may be assigned to a certain key based on a ranking, on contextual data, or a combination of both. In this embodiment, the "-ing" affix may have had a higher ranking than the "-ily" affix and was thus assigned to the "I" key. Accordingly, the "-ily" affix was assigned to the "L" key based on the corresponding "L" character being in the "-ily" affix.

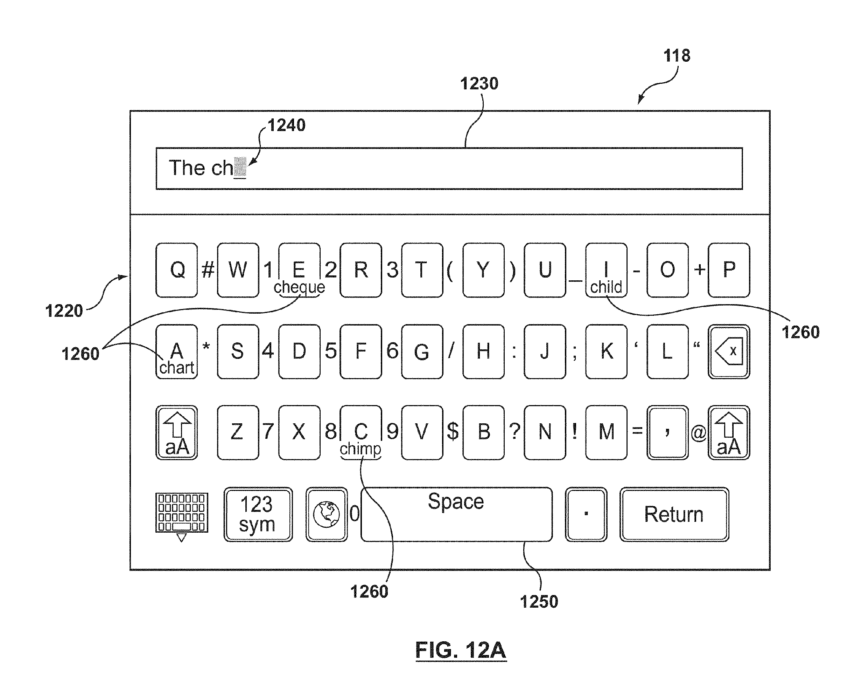

Fig. 12A shows an example where touch-sensitive display 118 displays "The ch" in a text bar 1230 and several generated set of characters 1260 are displayed at subsequent candidate input characters. In this example, generated set of characters 1260 include both "child" and "chimp." In this embodiment, while the third letter in both "child" and "chimp" are the same, touch-sensitive display displays "child" under the "I" key and displays "chimp" under the "C" key. The determination on which generated set of characters goes under which candidate input key can be based on a ranking (as specified above). As illustrated in this embodiment, touch-sensitive display 118 can display a generated set of characters (in this case, "chimp") on a key even though that key may not be associated with any subsequent characters of the characters in text bar 1230.

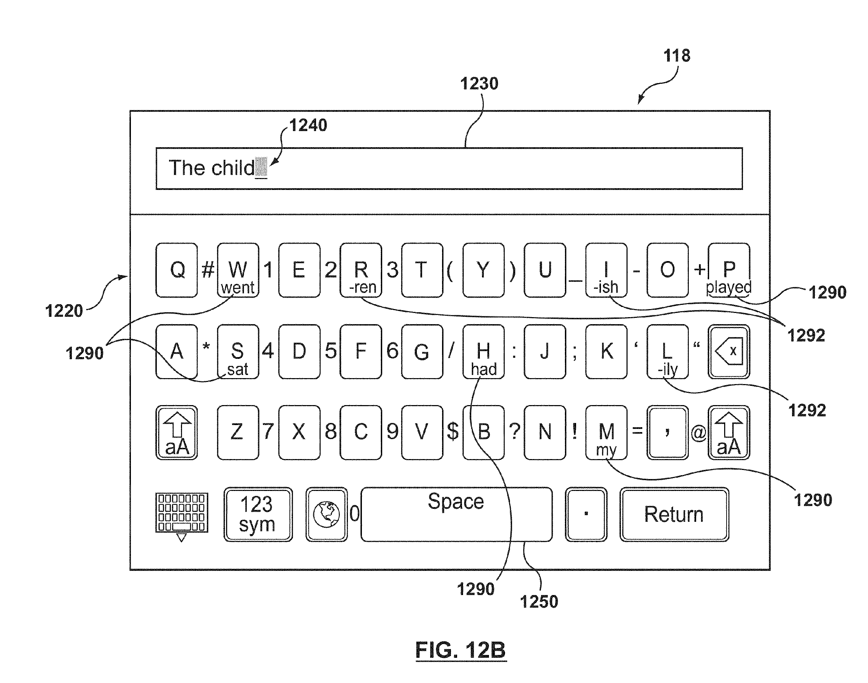

Fig. 12B shows an example where touch-sensitive display 118 receives the set of characters "child" as input after the user has selected the generated set of characters "child" 1260. The set of characters "child" is inserted in input field 1230 and, in this example, a <SPACE> character is not inserted. Predicted set of characters (such as words 1290 and affixes 1292) are now displayed at subsequent candidate input characters. In this example, while affixes "-ish" and "-ily" both correspond to the "I" key, touch-sensitive display 118 displays "-ish" with the "I" key and "-ily" with the "L" key. As stated above, the predicted affix may be assigned to a certain key based on a ranking, on conventional data, or a combination of both. In this embodiment, the "-ish" affix may have had a higher ranking than the "-ily" affix and was thus assigned to the "I" key. Accordingly, the "-ily" affix was assigned to the "L" key based on the corresponding "L" character being in the "-ily" affix.

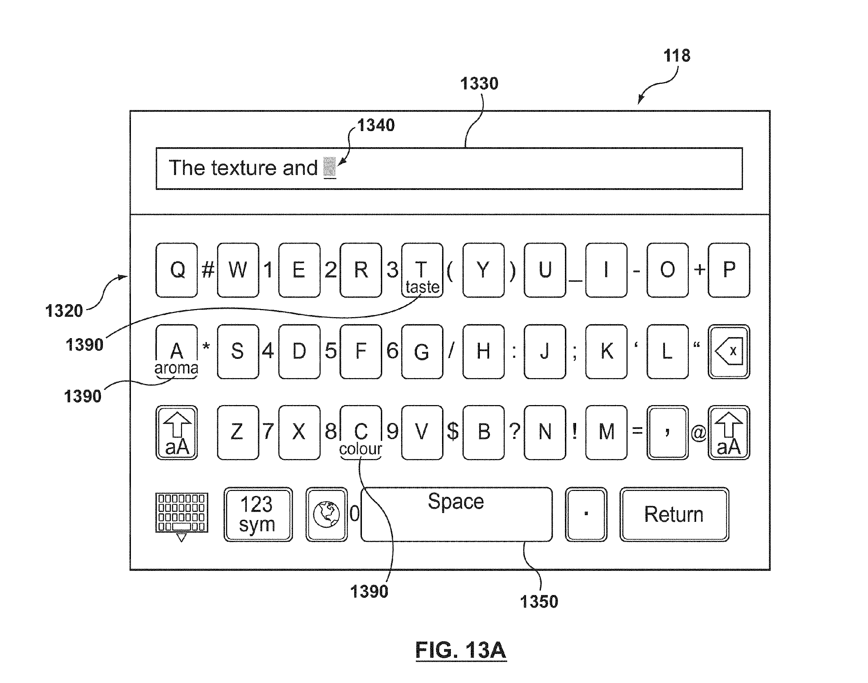

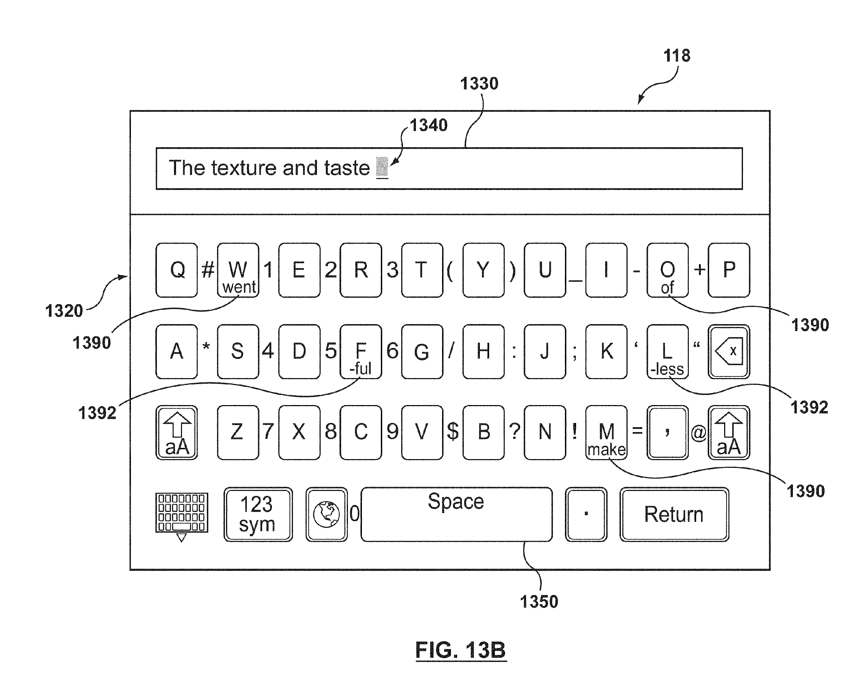

Fig. 13A shows an example where touch-sensitive display 118 displays "The texture and" in a text bar 1330 and several predicted set of characters (for example, words 1390) are displayed at subsequent candidate input characters. Fig. 13B shows an example where touch-sensitive display 118 received the set of characters "taste" as input after the user had selected the predicted set of characters "taste." In this example, a <SPACE> character was inserted after "taste." Consequently, predicted set of characters (such as, words 1390 and affixes 1392) are displayed at subsequent candidate input characters.

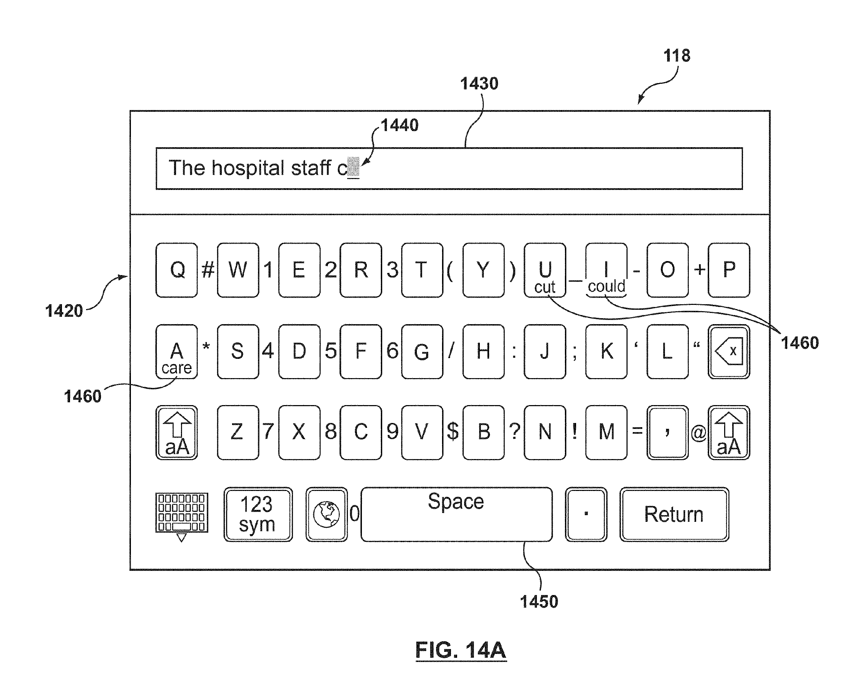

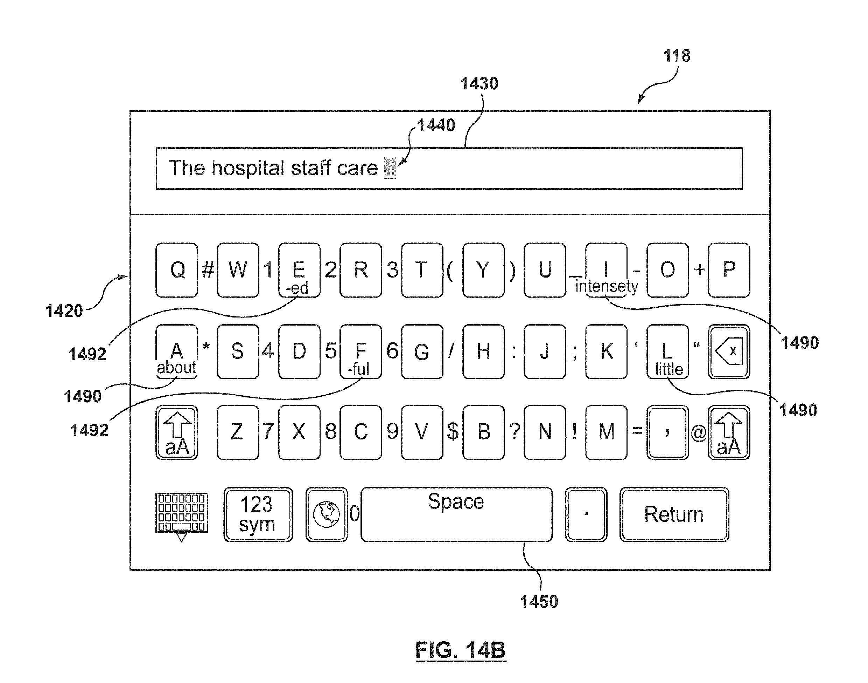

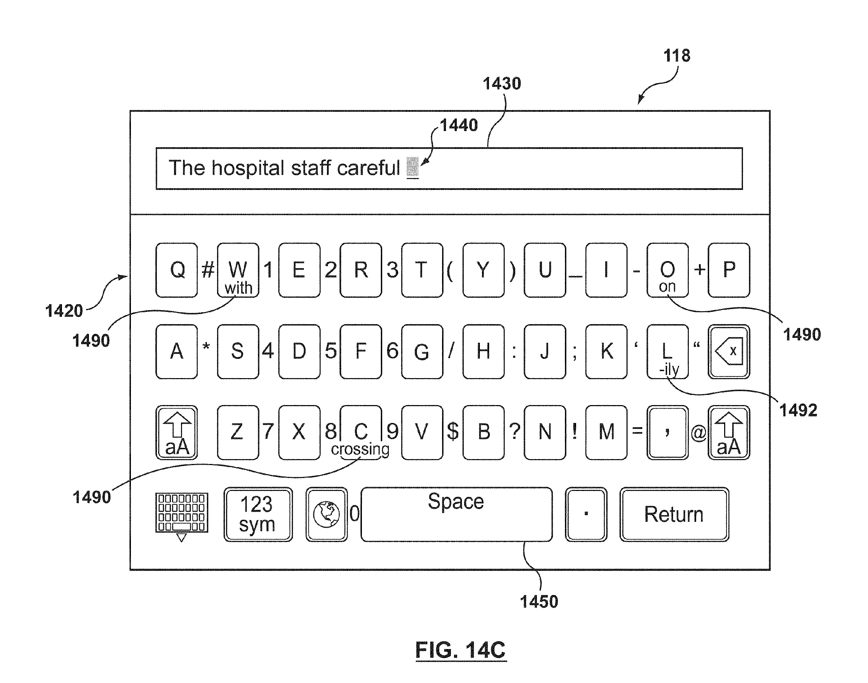

Fig. 14A shows an example where touch-sensitive display 118 displays "The hospital staff c" in a text bar 1430 and several generated set of characters 1460 are displayed at subsequent candidate input characters. Fig. 14B shows an example where touch-sensitive display 118 received the set of characters "care" as input after the user had chosen the generated set of characters "care." Generated set of characters "care" is now placed in input field 1430 along with a <SPACE> and predicted set of characters (such as, words 1490 and affixes 1492) are displayed at subsequent candidate input characters. Fig. 14C shows an example where touch-sensitive display 118 received the affix "-ful" as input (thereby modifying the set of characters "care" to "careful") after the user had chosen the predicted affix "-ful." Thus, the set of characters "careful" is now inserted into input field 1430. Note, in some embodiments, inputting a word or affix can modify the input word or word fragment. For example, if "spicy" was input by a user, and "ness" is a predicted affix and is inputted, "spicy" would change to "spiciness," dropping the "y" and adding "iness". In other embodiments, "happy" could change to "happiness" or "conceive" could change to "conceivable".

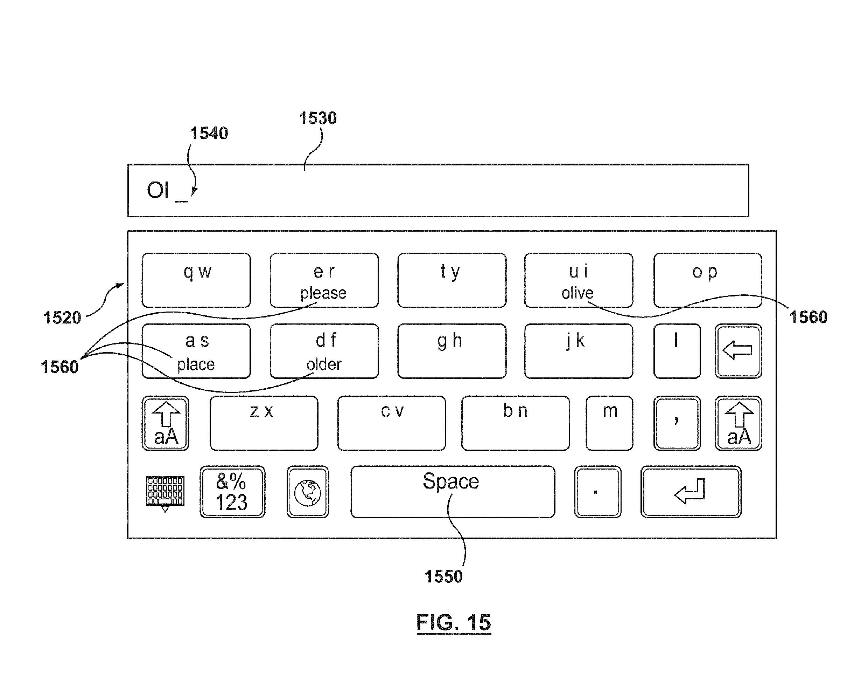

Fig. 15 shows an example of an ambiguous keyboard 1520, which can have multiple characters assigned to a key (for example, such as a telephone keypad where "A", "B" and "C" are assigned to key 2; "D", "E" and "F" are assigned to key 3, and so on). For example, the characters "Q" and "W" can be assigned one key, and the characters "E" and "R" assigned to another key. In this example, the user has input the characters "Ol" by pressing the "op" key followed by the "L" key. Using a predictor, generated set of characters 1560 are displayed at subsequent candidate input characters. Since the first pressed key can input either an "O" or a "P" and the second pressed key inputs an "L", generated set of characters 1560 will begin with "OL" or "PL", such as shown by generated set of characters 1560 in Fig. 15.

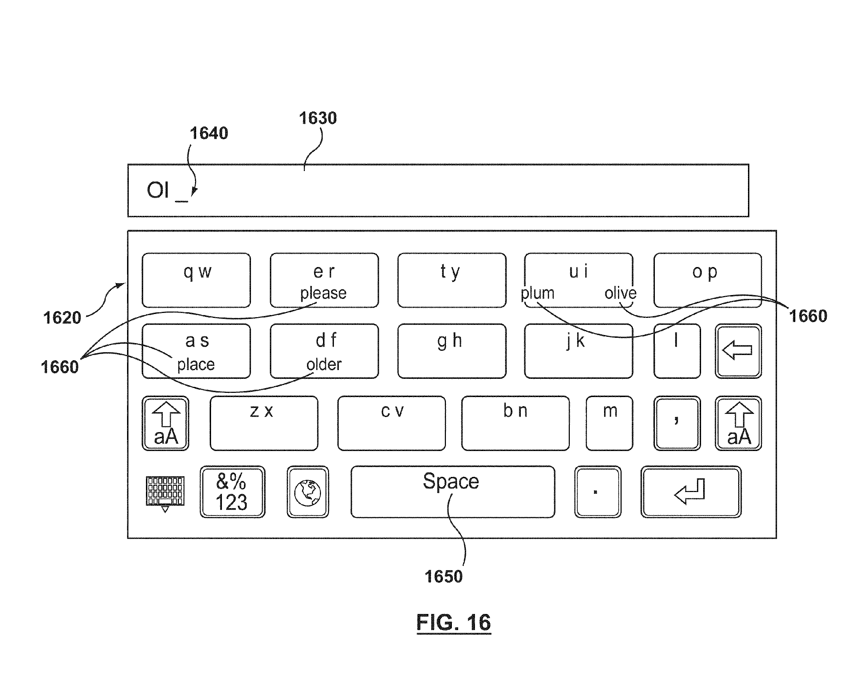

Fig. 16 shows another example of an ambiguous keyboard 1620. In this example, generated sets of characters "plum" and "olive" 1660 are displayed near the "ui" key. The sets of characters could also have been displayed at or on the "ui" key. Here, both sets of characters correspond to a particular input corresponding to a key, namely the third letter of plum is a "u" and the third letter of olive is an "i." Touch-sensitive display 118 (via main processor 102) can differentiate between the input of either set of characters based on the user's action. For example, the user can swipe at or near the right of the "ui" key to input "olive", or swipe at or near the left of the "ui" key to input "plum".

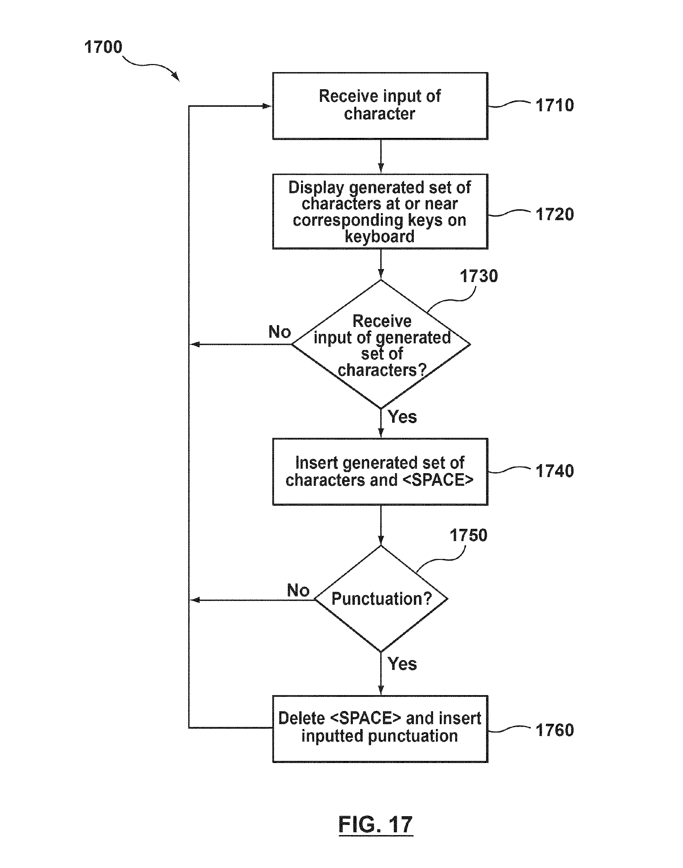

The examples and embodiments illustrated in Figs. 17, 18, and 19 can be implemented with any set of characters such as words, phrases, acronyms, names, slang, colloquialisms, abbreviations, or any combination thereof.

Fig. 17 shows in flowchart form a method 1700 in accordance with some embodiments. Method 1700 can be implemented with a processor, such as main processor 102, and stored on a tangible computer readable medium, such as hard drives, CDs, DVDs, flash memory, and the like. At block 1710, the processor receives an input of a character. At block 1720, the processor displays a generated set of characters at or near keys of subsequent candidate input characters on the touch-sensitive display, such as described above.

At block 1730, the processor receives an input of the generated set of characters chosen by a user. If the user does not choose a generated set of characters displayed at or near keys of subsequent candidate input characters, the method restarts at block 1710, where the touch-sensitive display can receive an input of another character. If a generated set of characters is received as input, at block 1740 the generated set of characters and a <SPACE> character is inserted in an input field (for example, input field 330 of Figs. 3-9). As mentioned previously, the user can choose the generated set of characters, for example, by swiping at or near it or by long pressing a key corresponding to the subsequent candidate input character.

Continuing at block 1750, if the processor detects that punctuation is not to be inserted, the method restarts at block 1710. If punctuation is to be inserted, the method continues to block 1760 where the <SPACE> character is deleted and the appropriate punctuation is added to the input field. After block 1760, the method starts over at block 1710.

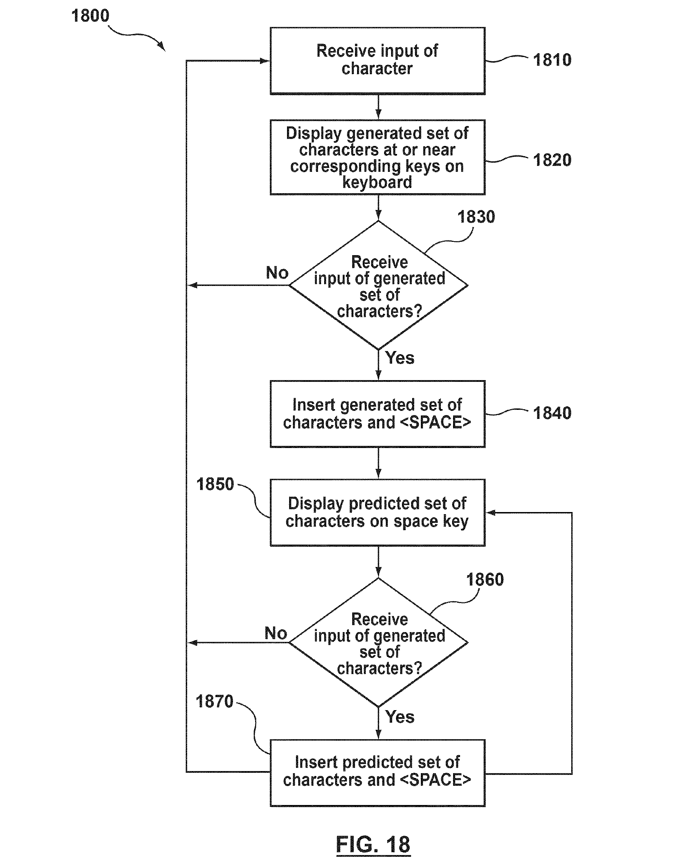

Fig. 18 is a flowchart illustrating example method 1800 in accordance with some embodiments. Method 1800 can be implemented with a processor, such as main processor 102, and stored on a tangible computer readable medium, such as hard drives, CDs, DVDs, flash memory, and the like. At block 1810, the processor receives an input of a character.

At block 1820, the processor displays a generated set of characters at or near a location on the keyboard corresponding to a subsequent candidate input character on a touch-sensitive display. At block 1830, the processor receives an input of a generated set of characters chosen by a user. If the user does not choose a generated set of characters displayed at or near keys of subsequent candidate input characters, the method restarts at block 1810, where the processor can receive an input of another character. If a generated set of characters is received as input, at block 1840 the generated set of characters and a <SPACE> character is inserted in an input field (for example, input field 330 of Figs. 3-9). As mentioned previously, the user can choose the generated set of characters, for example, by swiping at or near it or by pressing a key corresponding to the subsequent candidate input character for a predetermined period of time.

At block 1850, a predicted set of characters, different from the generated set(s) of characters, is displayed on a space key of the keyboard after the input of the generated set of characters in block 1830. The predicted set of characters displayed in block 1850 is determined by using a predictor. In some embodiments, the one or more predicted sets of characters can be placed on one or more keys other than the space key.

At block 1860, the processor can determine whether it has received an input of the predicted set of characters based on a user input. If the touch-sensitive display has not received an input of the predicted set of characters because the user has not chosen the predicted set of characters, the method restarts at block 1810. If the processor has received the input of the predicted set of characters, the method continues to block 1870, where the chosen predicted set of characters and a <SPACE> character is inserted in the input field. From here, method 1800 can return to either block 1810 or block 1850.

Even though method 1800 does not display the punctuation illustration as shown in method 1700, the punctuation illustration, as shown in blocks 1750 and 1760, can likewise be applied to method 1800.

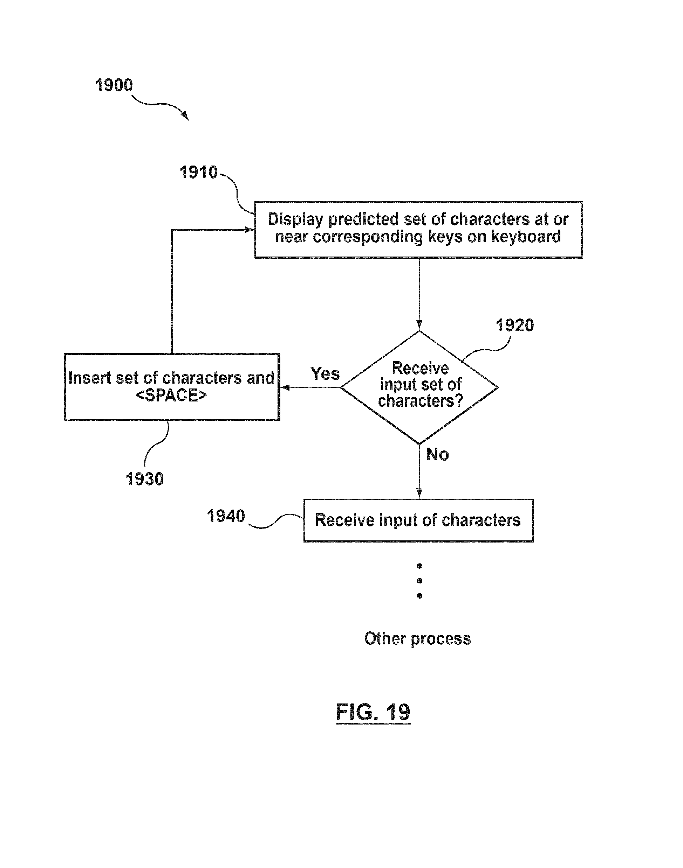

Fig. 19 is a flowchart illustrating an example method 1900 in accordance with some embodiments. At box 1910, predicted set of characters is displayed at corresponding subsequent candidate input characters. In these embodiments, an input has not been received or a delimiter has been activated, such as inputting a <SPACE>. Here, one or more predicted set of characters (such as, words, affixes, or a combination thereof) are placed on subsequent candidate input characters that correspond to the first letter of the generated set of characters. Moving to box 1920, it is determined whether the touch-sensitive display receives an input of the set of characters (such as, word or affix) based on a user's selection. If an input is received, the method moves to block 1930 where the predicted set of characters and a <SPACE> character are inserted into an input field. Then the method starts over at block 1910. If the touch-sensitive display does not receive an input of the set of characters, the touch-sensitive display is available to receive an input of a character (as described by block 1710 of Fig. 17 or block 1810 of Fig. 18) and proceed through methods (such as methods 1700 of Fig. 17 or 1800 of Fig. 18 or even method 1900 of Fig. 19).

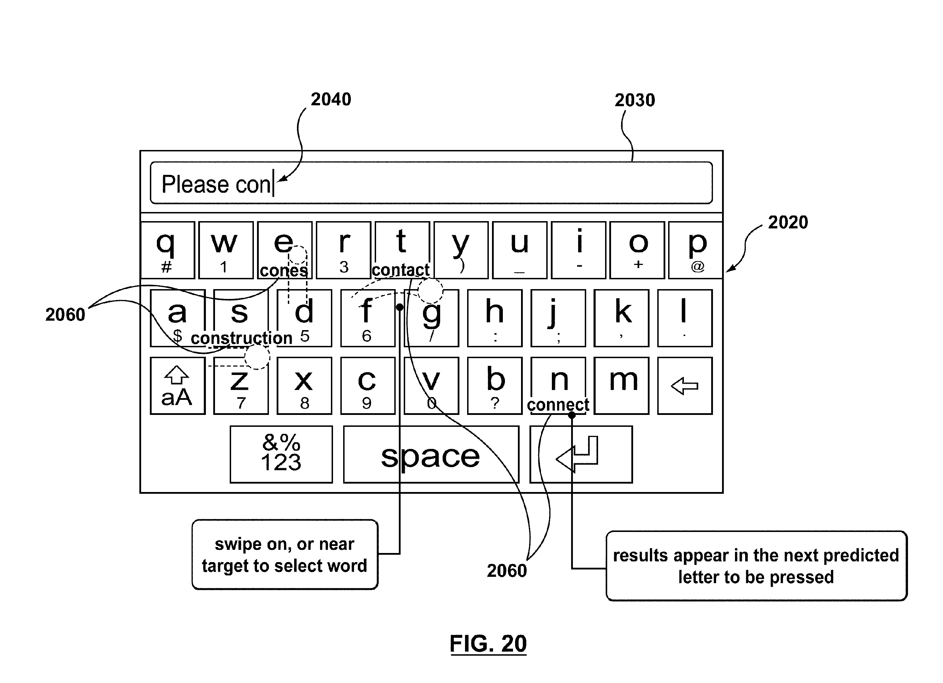

Fig. 20 shows another example of a virtual keyboard 2020 having an input field 2030. The set of characters "Please con" are received as input by the touch-sensitive display and displayed in the input field 2030 followed by a cursor 2040, which can be a vertical line (as shown) or any other shape, such as an underscore as mentioned previously. A predictor determines one or more generated set of characters 2060 based in part on the received input for the current position of cursor 2040 within the current word, which is in the fourth character position of the current word, as shown in input field 2030. The current word is the word in which the cursor is currently located. In the shown example, generated set of characters 2060 "cones", "contact", "construction" and "connect" are displayed. Each generated set of characters 2060 is displayed at a key corresponding to a subsequent candidate input character (for example, under the E, T, S and N keys of the virtual keyboard 2020, respectively), for the current position of cursor 2040, which is in the third character position, as shown in input field 2030.

In the shown example, each generated set of characters 2060 is displayed at or near keys on the virtual keyboard 2020 associated with the subsequent candidate input characters. The display of a generated set of characters 2060 at or near a key corresponding to a subsequent candidate input character depends, for instance, on the size of the generated set of characters 2060 and the size of generated set of characters associated with nearby keys of other subsequent candidate input characters. When the generated set of characters associated with nearby keys in the same row of keys in the virtual keyboard 2020 are too large to be displayed at the same time without overlapping with each other or without a predetermined distance between the generated sets of characters, the processor 102 limits the generated set of characters which are displayed. The processor 102 may limit the generated set of characters which are displayed using one or any combination of the rank of each generated set of characters, the size of each generated set of characters, and a distance between each generated set of characters which are displayed so that a predetermined distance between the generated set of characters is maintained. This may result in the display of one or more generated sets of characters which are larger than the associated key in the virtual keyboard 2020.

In some examples, if two generated sets of characters are both ranked high, and these sets of characters would otherwise be displayed at nearby keys but cannot be displayed and still maintain a predetermined distance between the generated sets of characters at the display text size, the electronic device could be configured to display only the highest ranked generated set of characters. This results in the display of the most likely generated set of characters. In other examples, only the longest of the generated set of characters is displayed. This may be beneficial in that allowing faster entry of longer words saves time and processing cycles, thereby leveraging the predictive text input solution. In yet other examples, only the shortest generated set of characters is displayed. This may be beneficial in that shorter words can be more common, at least for some users, thereby allowing faster entry of words which saves time and processing cycles, thereby leveraging the predictive text input solution.

In some examples, the processor 102 may only limit the generated set of characters which are displayed in neighboring/adjacent keys in the same row of keys in the virtual keyboard 2020. In some examples, the processor 102 may limit the generated set of characters which are displayed in neighboring/adjacent keys in the same row of keys in the virtual keyboard 2020 so that a generated set of characters is never displayed in neighboring/adjacent keys irrespective of the size of the generated set of characters or distance between each generated set of characters. In such examples, the processor 102 uses the rank to determine which generated set of characters are displayed.

In other examples, the processor 102 can limit the generated set of characters which are displayed when the generated set of characters associated with nearby keys in different rows of keys in the virtual keyboard 2020 are too large to be displayed at the same time without overlapping with each other or without a predetermined distance between the generated sets of characters. In other examples, the processor 102 can limit the generated set of characters which are displayed when the generated set of characters associated with nearby keys in the same or different columns of keys in the virtual keyboard 2020 are too large to be displayed at the same time without overlapping with each other or without a predetermined distance between the generated sets of characters

As mentioned previously, a user can use a finger or stylus to swipe a generated set of characters to input that generated set of characters. An individual letter, in contrast, can be input by tapping a respective key in the virtual keyboard 2020 using a finger or stylus. The touch-sensitive display differentiates between tap and swipe events using movement and duration of touch events, the details of which are known in the art and need not be described herein. Each key in the virtual keyboard 2020 and each generated set of characters 2060 which is displayed has an associated target area on the touch-sensitive display. The target area associated with each generated set of characters can be larger than and/or overlap with the target area of the key corresponding to the subsequent candidate input character with which it is associated and possibly nearby keys, such as neighboring keys in the same row. A user need only swipe on or nearby a displayed generated set of characters to input the generated set of characters. This permits faster input of a generated set of characters by creating larger and more accessible target areas, thereby saving time and processing cycles. In some examples, a generated set of characters can be input by detecting a swipe in any direction at or near the displayed generated set of characters. In other examples, a generated set of characters can only be input by detecting a swipe in a particular direction at or near the displayed generated set of characters. The particular direction may be associated with a direction in which the particular direction displayed generated set of characters (e.g., left or right in the shown example). In some examples, the swipe is at or near the displayed generated set of characters when the swipe has an initial contact point within the target area associated with the displayed generated set of characters (which may be the same or larger than the displayed generated set of characters).

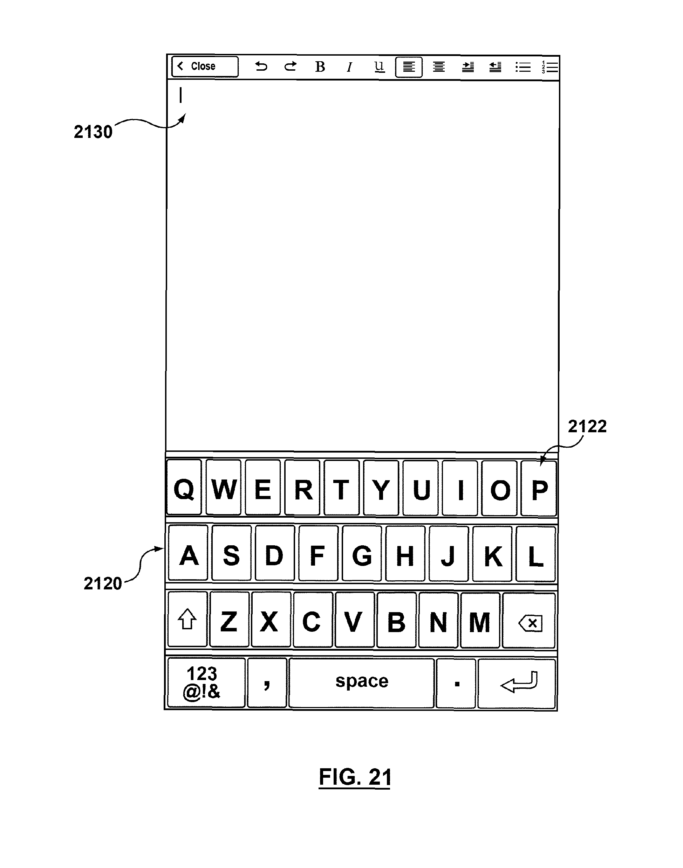

In some examples, the electronic device may have two or more input states in which it may operate. Fig. 21 shows an example of a user interface screen when the device is in a first input state. The example user interface screen has a virtual keyboard 2120 and an input field 2130. The virtual keyboard 2120 has a plurality of keys 2122.

The first input state is associated with a first input character set. Characters in the first input character set are displayed on their associated keys. For example, in the example virtual keyboard 2120 in Fig. 21, the first input character set includes alphabetic characters, the comma character, the space character and the period character. In the first input state, the activation of a key associated with a character in the first input character set generates an input of that character. Depending on the operating system, application and/or character-encoding scheme used by the device, other keys such as Backspace and Enter could, in some examples, be considered to be characters. In some examples, inputs associated with function keys or any other keys are also considered to be characters. The virtual keyboard also includes a dedicated key for changing the input mode which, in the shown embodiment of Fig. 21, is the leftmost key in the bottom row, labeled "123@!&". In other embodiments, the dedicated key for changing the input mode may be omitted.

The virtual keyboard characters illustrated in Fig. 21 represent an example of a first input character set. Any combination of characters is possible for the first input character set or for any other input character set described herein. The example arrangement of the characters on the associated keys of the virtual keyboard seen in Fig. 21 can also be varied when the device is in the first input state or any other input state.

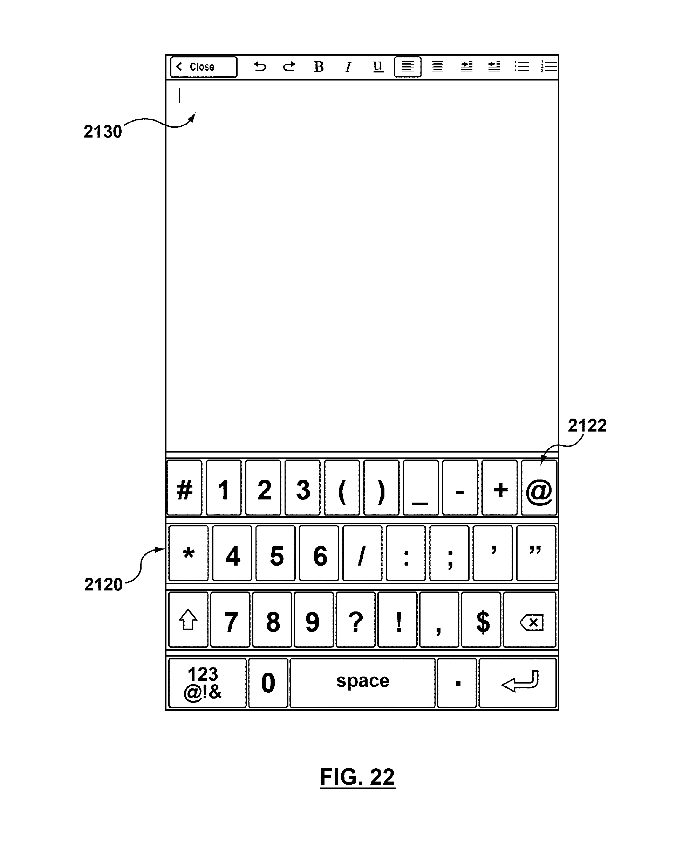

Fig. 22 shows an example of a user interface screen when the device is in a second input state, which is associated with a second input character set. In the second input state, the virtual keyboard 2120 includes characters from this second input character set. In the example virtual keyboard seen in Fig. 22, the second input character set includes numeric characters, symbols and punctuation.

In some examples, some characters in the first input character set may also be included in the second input character set. For example, the period, comma and space characters appear in both the example first input character set in Fig. 21 as well as the example second input character set in Fig. 22. In each input state, these characters appearing in both input character sets can be associated with the same key or with a different key. Whether an input character is associated with the same key or a different key may depend on the particular input character. In the shown example, the period character is associated with the key in the bottom row, second from the right in both the example first input state in Fig. 21 and the example second input state in Fig. 22. In contrast, in the first input state, the comma character is associated with a key in the bottom row; whereas in the second input state, the comma character is associated with a key in the second row from the bottom.

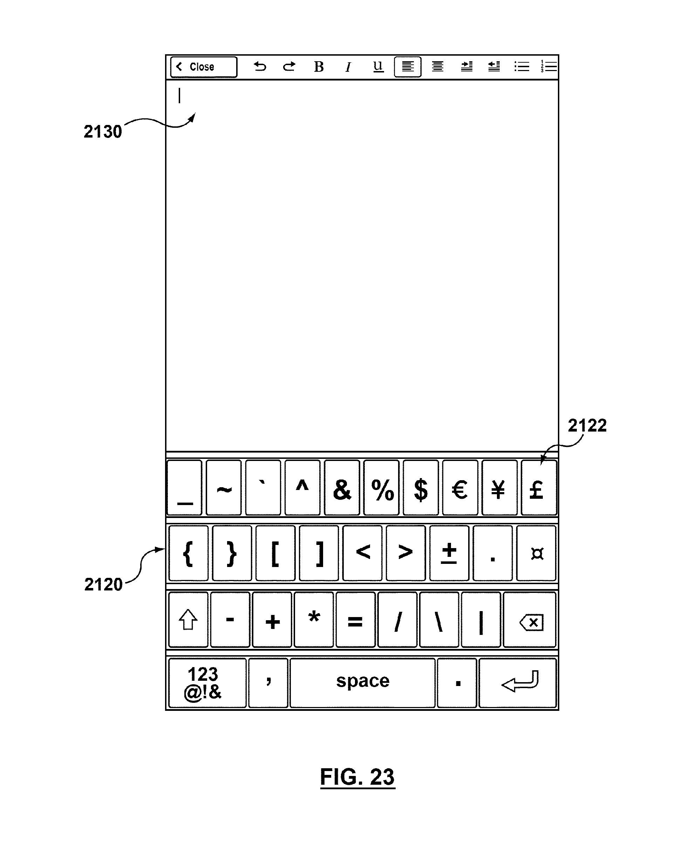

Fig. 23 shows an example of a user interface screen when the device is in a third input state, which is associated with a third input character set. In the example virtual keyboard 2120 seen in Fig. 23, the third input character set includes additional symbols and punctuation which are not included in the second input character set. In some examples, some characters in the first input character set and/or second input character set may also be included in the third input character set. For example, the period, comma and space characters appear in the example first input character set, second input character set and third character set show in Fig. 21-23, respectively. As mentioned previously with respect to the second input character set, the characters appearing in the various input character sets can be associated with the same key or with a different key, and whether an input character is associated with the same key or a different key may depend on the particular input character.

While the example input character sets illustrated in Figs. 21-23 have been respectively described as first, second and third input character sets, in other examples, the order of the input character sets may be varied. In the shown embodiments, the number and arrangement of keys in the virtual keyboard is the same to assist in user adoption and ease of use. In such embodiments, the constant number and configuration of keys allows makes targeting easier as users can rely upon constant key positions. It is only the associated input characters which change between the various input character sets. This has been found to be advantageous when compared to solutions in which the number of keys and/or key configuration changes. However, in other embodiments the number of keys and key configuration could change between input states.

In some examples, the device may have two input states. In other examples, the device may have three input states. In other examples, the device may have more than three inputs states. In any of these examples, each input state is associated with a different input character set.

In some examples, the input character sets associated with the various input states may include alphanumeric characters, symbols, punctuation, emoticons, command or function inputs, navigation inputs, or any other character.

In some examples, the input character sets associated with the various inputs states may include characters from different languages including but not limited to accents, alphabetic characters with accents, or other symbols and characters associated with a particular language.

In some examples, the keyboard may be displayed without a key dedicated to changing the input mode. This may save space on the keyboard and in some examples, may make room for additional character keys, may reduce the number of rows in the keyboard, and/or may make room for larger keys.

Referring now to Fig. 21-23 collectively, in some examples the virtual keyboard 2120 has a first input state in which the virtual keyboard includes a first input character set (shown in Fig. 21), a second input state in which the virtual keyboard includes a second input character set (shown in Fig. 22), and third input state in which the virtual keyboard includes a third input character set (shown in Fig. 23). In some examples, the includes a first input character set is alphanumeric character set, the second input character set is a first symbol character set, and the third input character set is a second symbol character set. In at least some examples, the keyboard layout (e.g., arrangement of keys) remains the same between the first, second and third input states. It is only the characters associated with the keys which changes. However, the keyboard layout could change in other examples.

In one example, the virtual keyboard can only change sequentially between the first, second and third input states. The first input state represents a base state from which the device may only be changed to the second input state. When in the second input state, the device may be reverted back to the first input state or changed to the third input state. When in the third input state, the device may only be reverted back to the second input state. Alternatively, the virtual keyboard can cycle through the first, second and third input states. For example, in the first input state, the device may be changed to the second input state or third input state in accordance with a respective predefined gesture. When in the third input state, the device may be changed to the second input state or first input state in accordance with a respective predefined gesture.

In another example, the virtual keyboard is not limited to sequential changes. The virtual keyboard may be changed from the first input state to the second input state via a first predefined gesture and may be changed from the first input state to the third input state via a second predefined gesture.

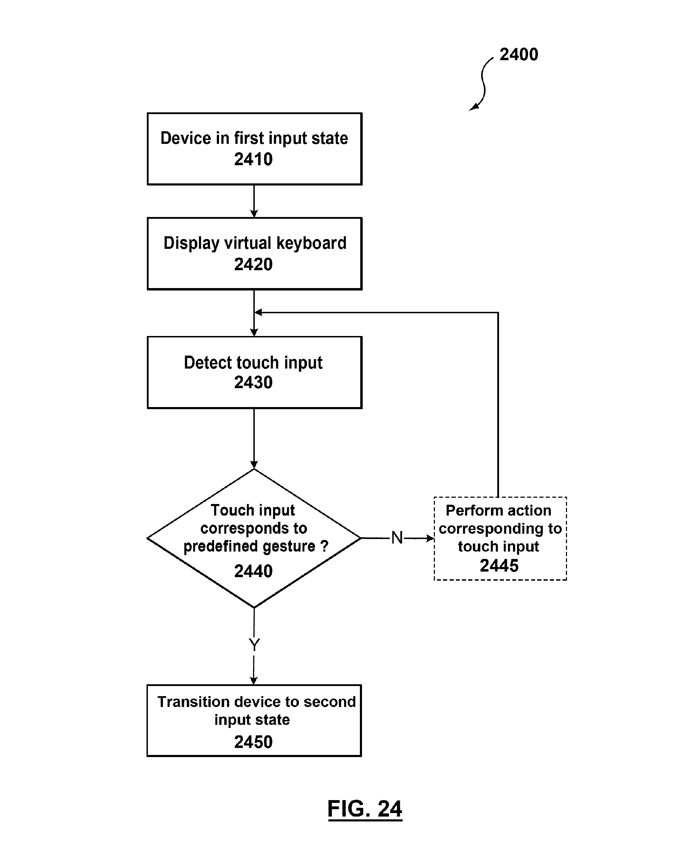

Fig. 24 shows a flowchart illustrating an example method 2400 of changing input states on an electronic device, consistent with example embodiments disclosed herein. The example method 2400 or any of the example methods described herein can be implemented with a processor, such as main processor 102, and stored on a tangible computer readable medium, such as hard drives, CDs, DVDs, flash memory, and the like. Example method 2400 begins at block 2410 with the electronic device in the first input state.

If not already displayed, at block 2420, a virtual keyboard is displayed on the touch-sensitive display 118. The displayed virtual keyboard 2120 includes a first input character set associated with the first input state. Characters in the first input character set are displayed on the virtual keyboard keys associated with each character. When in the first input state, activation of one of the virtual keyboard keys generates an input corresponding to the character from the first input character set associated with the activated key.

At block 2430, a touch input is detected on the touch-sensitive display 118. If, at block 2440, the detected touch input corresponds to a predefined gesture for changing an input mode, the method proceeds to block 2450. In some examples, the predefined gesture for changing an input mode corresponds to a swipe gesture in a first direction and a swipe gesture in a second direction opposite to the first direction corresponds to a predefined gesture for selecting a predicted set of characters in accordance with the methods mentioned previously. In some examples, the first direction may be down for a downward swipe and the second direction may be up for an upward swipe. In other examples, the first direction may be left for a leftward swipe and the second direction may be right for a rightward swipe.

The above-described combination of gesture-action assignments is believed to have potential advantages in several respects, particularly with regards to providing a more natural interaction with the device. Providing more natural interaction with the device involves identifying efficient gestures which are relatively easy to perform, relatively easy to remember, have discoverability which allows users to "discover" functions during normal use without formal training, and which can be differentiated from other gestures by users (and by the device) relatively easily. Arbitrary or poorly considered gesture-action assignments tend to create awkward and unnatural user experiences which make the required interaction harder to perform, harder to remember, undiscoverable (or at least less discoverable), and harder to differentiate from other gestures by users.

Turning to the above-described combination of gesture-action assignments, it is believed that prediction selecting and input mode changing are likely to be some of the more commonly used actions when using a virtual keyboard having predictive text functionality. The assignment of relatively simple gestures to invoke these actions facilitates the use of more frequently used actions. Furthermore, the use of complementary gestures (e.g., the same gestures performed in opposite directions) is believed to enhance user learning and adoption. In addition, the particular combination of a down swipe and an up swipe is believed to be relatively easy to perform, relatively easy to remember, have discoverability which allows users to "discover" functions during normal use without formal training, and which can be differentiated from other gestures by users (and by the device) relatively easily.

In other examples, the predefined gesture for changing an input mode corresponds to an upward swipe gesture and the predefined gesture for selecting a predicted set of characters in accordance with the methods mentioned previously is a downward swipe gesture.

When the predefined gesture is a swipe, the swipe may have a minimum length (threshold), the swipe may have a predefined direction (e.g., up, down, left, right, diagonal, etc.), the swipe may start or end at a predefined region of the touch-sensitive display 118, or any combination thereof. For example, the swipe may have an initial contact point at a location of a particular key (such as the space key). In some examples, the particular key may be a non-character key to avoid interference with character input.

The swipe may be a multi-touch swipe having two or more touch events. For example, the predefined gesture may correspond to a swipe input wherein a user simultaneously swipes the touch-sensitive display 118 using two fingers or contact points. In some examples, the predefined gesture may correspond to a swipe motion which changes directions. For example, the predefined gesture may include an L-shaped swipe wherein in the swipe begins in a downward direction and then continues in a left-to-right motion. Any other combinations of directions and motions are also possible. The predefined gesture may correspond to any combination of single or multi-touch input motions having any pattern or number of swipe gestures.

Upon receiving a touch input corresponding to the predefined gesture for changing the input mode, the device at block 2450 is transitioned to the second input state. In some examples, transitioning to the second input state includes transitioning the characters displayed on the virtual keyboard keys from characters in the first input character set to characters in the second input set. In some examples, the character display transition is performed immediately after determining that the touch input corresponds to the predefined gesture for changing the input mode.

In other examples, the character display transition is performed gradually. In some of these examples, the characters from the first character set may gradually scroll off their associated keys while the characters from the second character set gradually scroll onto the associated key. In some examples, the direction of the scrolling corresponds to the direction of the touch input corresponding to the predefined gesture in block 2440.

In some examples, the gradual character display transition can be displayed using any transition effects. These effects may include fading, shrinking, enlarging, scrolling and the like.

In some examples, the position, layout and/or display of the keys remain constant through the input state transition. In some examples, this is performed by only transitioning the characters displayed on each key but not the rendering of the keys themselves. This increases computational efficiency by reducing the processing strain caused by graphics rendering. In some examples, this may reduce the visual distraction to the user. In some examples, this may allow a user to more quickly focus on the new characters, and in some instances may reduce strain on the user's eyes.

Transitioning the device to the second input state includes changing the inputs associated with each key from first input state inputs to second input state inputs. Once transitioned to the second input state, activating a key will register the associated character or function input for the second input state. In some examples, every key in the second input state is associated with a different character or function than the first input state. In some examples, a subset of the keys in the second input state may be associated with the same character or function as in the first input state.

If the touch input at block 2440 does not correspond to the predefined gesture for transitioning the input state, the device remains in the first input state and proceeds to optional block 2445. At block 2445, the device may perform an action corresponding to the non-state transitioning touch input. For example, when the predefined gesture is a swipe (e.g., up swipe), a swipe in a different direction than the predefined gesture may select a predicted set of characters in accordance with the methods mentioned previously If the touch input does not correspond to other input, no action is performed.

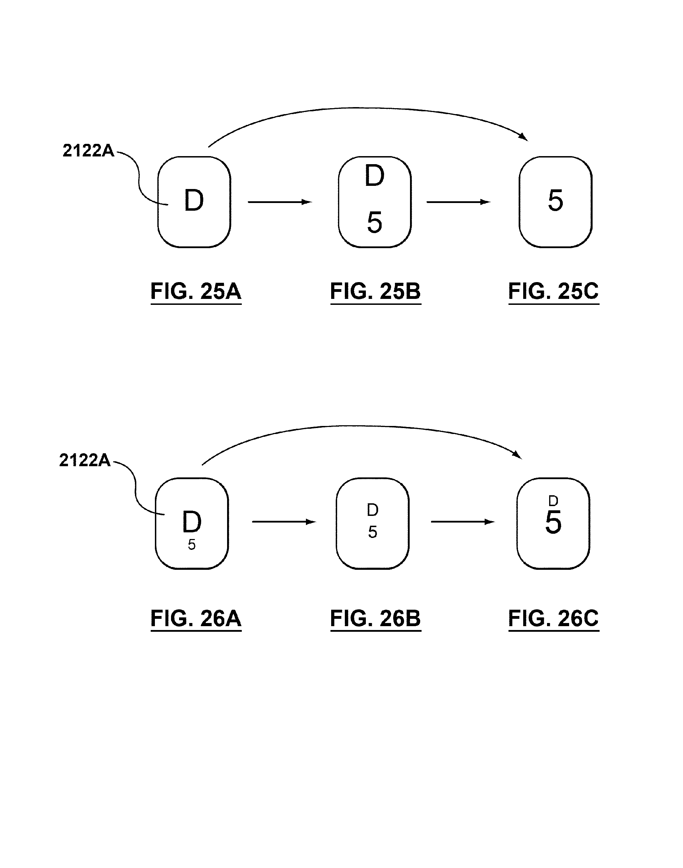

Figs. 25A, 25B and 25C, show the transitioning of an example key 2122A from the first input state to the second input state. As seen in the example keyboard layouts in Figs. 21 and 22, the key associated with the character "D" in the first input state is associated with the character "5" in the second input state. Fig. 25A shows this key when the device is in the first input state, and Fig 25C shows this key when the device is in the second input state. Fig. 25B shows an example of the key when visual feedback of the transition from the first input state to the second input state is performed gradually. As seen in FIG. 25B, the "D" character is scrolling up off the top of the key while the "5" character is scrolling up from the bottom of the key until it reaches the position seen in FIG. 25C. In some examples, there may be no gradual transition, and the character displayed on the key goes from the key in FIG. 25A directly to the key in FIG. 25C.

In some examples, the character currently associated with the key is displayed more prominently than a character associated with the key in one or more different input states. For example, when the device is in the first input state, a key displays both the character associated with the key in the first input state as well as the character associated with the key in the second input state. The character associated with the key in the first input state is displayed more prominently than the character associated with the key in the second input state. Similarly, when the device is in the second input state, a key displays both the character associated with the key in the second input state as well as the character associated with the key in the first input state. The character associated with the key in the second input state is displayed more prominently than the character associated with the key in the first input state.

When a third input state is provided and the device is in the second input state, a key displays both the character associated with the key in the second input state as well as the character associated with the key in the first input state and the third input state. The character associated with the key in the second input state is displayed more prominently than the character associated with the key in the first input state and the third input state. When the device is in the third input state, a key displays both the character associated with the key in the third input state as well as the character associated with the key in the second input state. The character associated with the key in the third input state is displayed more prominently than the character associated with the key in the second input state.

Fig. 26A shows an example key 2122A in the first input state. In the first input state, the key is associated with the "D" character. Activation of the key in this state will generate a "d" character as input. The key also shows that the key is associated with the "5" character in the second input state. As the device is in the first input state and the key is currently associated with the "D" character, "D" is displayed more prominently than "5". In Fig. 26A, the displayed "D" is larger and is centered on the key, while the "5" is smaller and off center. In other examples, other arrangements and effects for displaying a character more prominently may be used.

Fig. 26B shows an example of visual feedback of the transition from the first input state to the second input state. In this example, the "5" is becoming more prominent by becoming larger and moving to the centre of the key while the "D" is becoming less prominent by becoming smaller and moving up and away from the centre of the key. As discussed previously, this visual feedback of the transition may be omitted in some embodiments and the key may transition directly from the key illustrated in Fig. 26A to the key illustrated in Fig. 26C.

Fig. 26C shows an example of the key in the second input state. The key now prominently shows the "5" and activation of the key in this state will generate a "5" input. In some examples, when in the second input state, the key may also display the first input state character associated with the key as illustrated by the less prominently displayed "D".

In some examples, the touch input corresponding to the predefined gesture may inversely correspond to the display or transitioning effects of the characters. For example, with reference to Figs. 25A-C, if the predefined gesture is a down swipe, the upward scrolling characters as seen in 25B inversely corresponds to the direction of the down swipe. Similarly, with reference to the example in Figs. 26A-C, if the predefined gesture is a down swipe, the upward movement of the two characters during the transition inversely corresponds to the direction of the down swipe.

The above transitioning examples show only a single key for illustrative purposes. However, it should be understood that the transitioning of all the keys or of a subset of the keys on the virtual keyboard may be performed concurrently.

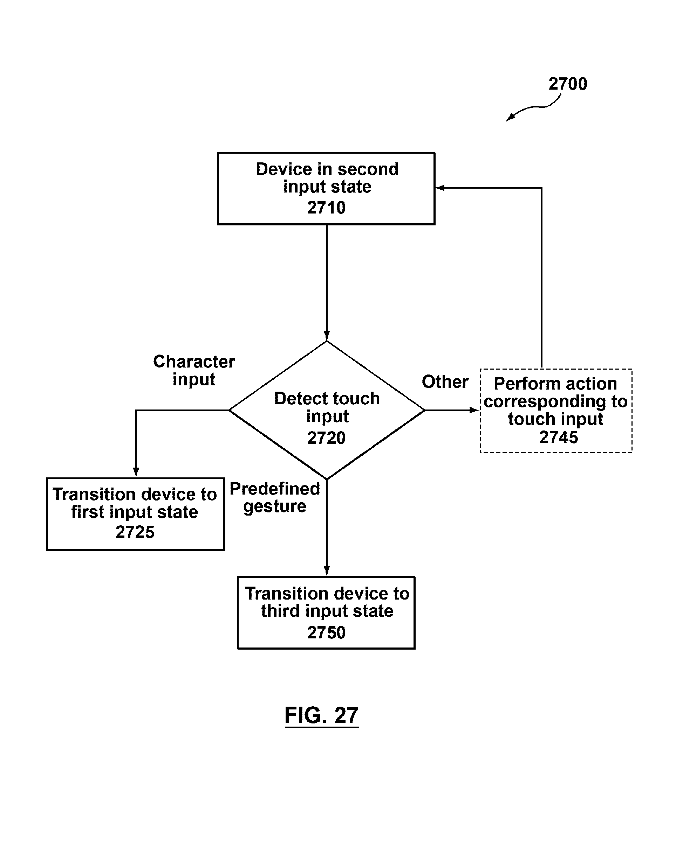

Fig. 27 shows a flowchart illustrating an example method 2700 of changing input states on an electronic device, consistent with example embodiments disclosed herein. Example method 2700 continues from block 2450 in the example method 2400 in Fig. 24 after the device has transitioned from the first input state to the second input state. Example method 2700 begins at block 2710 with the electronic device in the second input state.

At 2720, the device detects a touch input on the touch-sensitive display 118. If the touch input is a character input (e.g., a tap on a respective key), the device automatically transitions from the second input state to the first input state at block 2725. This transition may be performed in a similar manner to any of the transitions from the first to the second input states described herein. In this manner, the initial transition from the first input state to the second input state at block 2450 is a short term transition and only lasts for a single character input.

If the touch input corresponds to a predefined gesture, the device transitions from the second input state to the third input state at block 2750. This transition may be performed in a similar manner to any of the transitions from the first to the second input states described herein. In some examples, when the device is in the third input state, the device may automatically transition back to the first input state after the detection of a character input.

If the touch input does not correspond to the predefined gesture for transitioning the input state or character input, the device remains in the second input state and proceeds to optional block 2745. At optional block 2745, the device may perform an action corresponding to the other input (no character input and non-state transitioning touch input) if the touch input which is detected matches the input for triggering the action.

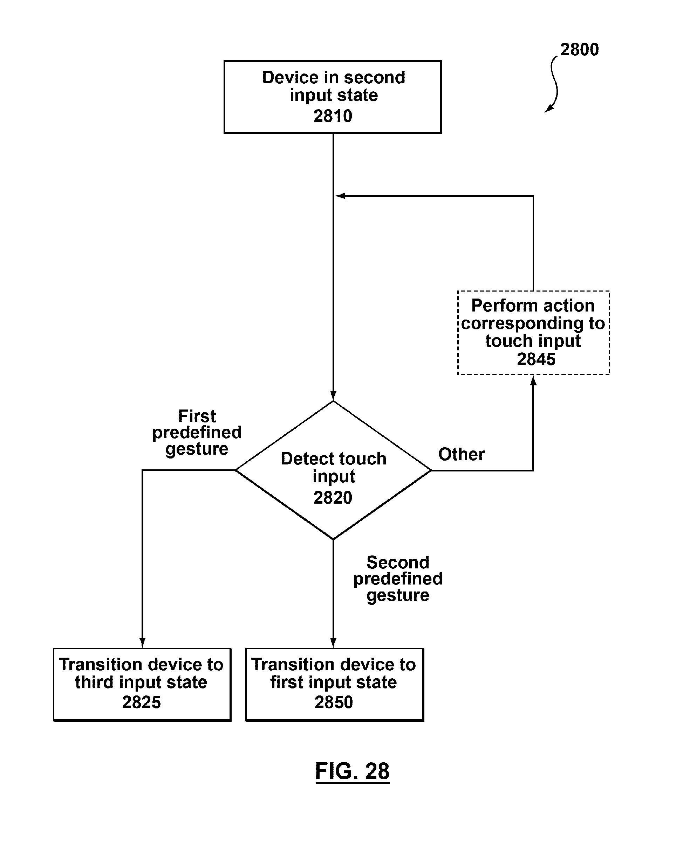

Fig. 28 shows a flowchart illustrating an example method 2800 of changing input states on an electronic device, consistent with example embodiments disclosed herein. Example method 2800 continues from block 2450 in the example method 2400 in Fig. 24 after the device has transitioned from the first input state to the second input state. Example method 2800 begins at block 2810 with the electronic device in the second input state. In Fig. 28, the device remains in the second input state after character input.

At block 2820, a touch input is detected on the touch-sensitive display 118. When the detected touch input corresponds to a first predefined gesture, the device is transitioned from the second input state to a third input state at block 2825. In some examples, the first predefined gesture and the transition may be similar to any of the example predefined gestures and transitions described herein.

If the detected touch input from block 2820 does not correspond to the first predefined gesture, but does correspond to a second predefined gesture, the device is transitioned from the second input state back to the first input state at block 2850. In some examples, the second predefined gesture and the transition may be similar to any of the example predefined gestures and transitions described herein.

If the touch input from block 2820 does not correspond to either the first predefined gesture or the second predefined gesture, the device remains in the second input state and proceeds to optional block 2845. At block 2845, the device may perform an action corresponding to the non-state transitioning touch input.

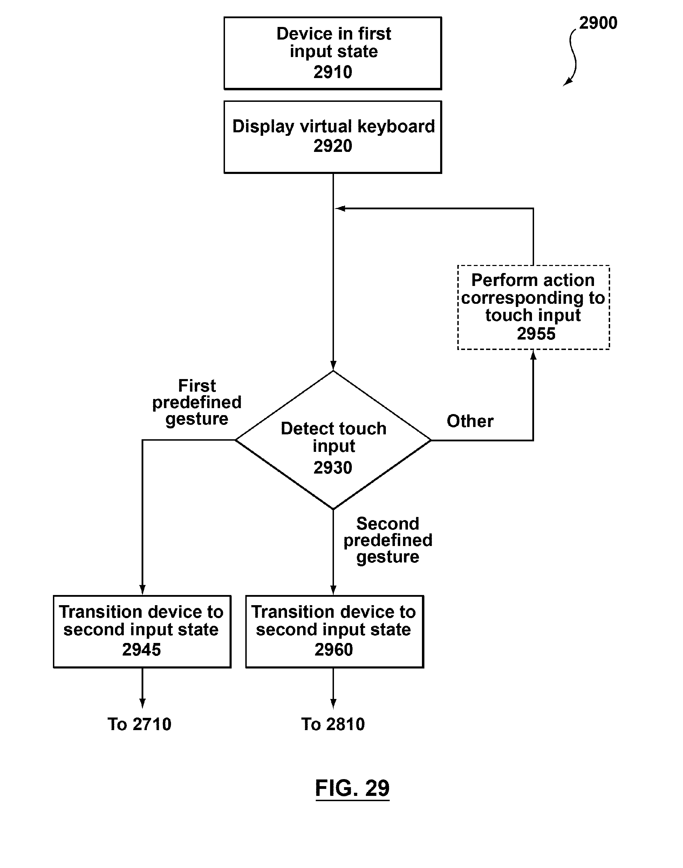

Fig. 29 shows a flowchart illustrating an example method 2900 of changing input states on an electronic device, consistent with example embodiments disclosed herein. Method 2900 begins at block 2910 with the electronic device in the first input state.

If not already displayed, at block 2920, a virtual keyboard is displayed on the touch-sensitive display 118. The displayed virtual keyboard 2120 includes a first input character set associated with the first input state. Characters in the first input character set are displayed on the virtual keyboard keys associated with each character. When in the first input state, activation of one of the virtual keyboard keys generates an input corresponding to the character from the first input character set associated with the activated key.

At block 2930, a touch input is detected on the touch-sensitive display 118. If the detected touch input corresponds to a first predefined gesture, the device is transitioned from the first input state to the second input state at block 2945 and proceeds to block 2710 in Fig. 27.

If the detected touch input does not correspond to the first predefined gesture, but does correspond to a second predefined gesture, the device is transitioned from the first input state to the second input state at block 2960 and proceeds to block 2810 in Fig. 28.

If the touch input from block 2930 does not correspond to either the first predefined gesture or the second predefined gesture, the device remains in the first input state and proceeds to optional block 2955. At block 2955, the device may perform an action corresponding to the non-state transitioning touch input.

In Fig. 29, two different touch inputs may transition the device from the first input state to the second input state. If the touch input corresponds to the first predefined gesture, the device is transitioned to the second input state until a single character input is received, at which point the device is automatically transitioned back to the first input state as seen in Fig. 27. Conversely, if the touch input corresponds to the second predefined gesture, the device is transitioned to and stays in the second input state until another touch input is received which transitions the device to a different state as seen in Fig. 28.

In some examples, the first predefined gesture may be a single down swipe and the second predefined gesture may be a multi-touch down swipe. In some examples, the first predefined gesture may be a single down swipe and the second predefined gesture may be an L-shaped swipe. In other examples, different combinations of predefined gestures are also possible.

In some examples, instead of transitioning to the second input state at block 2960, when the touch input corresponds to the second predefined gesture, the device is transitioned from the first input state to the third input state.

In the example methods described herein, reference to the term "predefined gesture" with respect to one figure may or may not refer to the same predefined gesture referenced with respect to a different figure. For example, the predefined gesture in Fig. 24 in some examples may be the same predefined gesture in Fig. 27. However, in other examples, the predefined gestures with respect to these two figures may be different. The same is true for the terms "first predefined gesture" and "second predefined gesture".

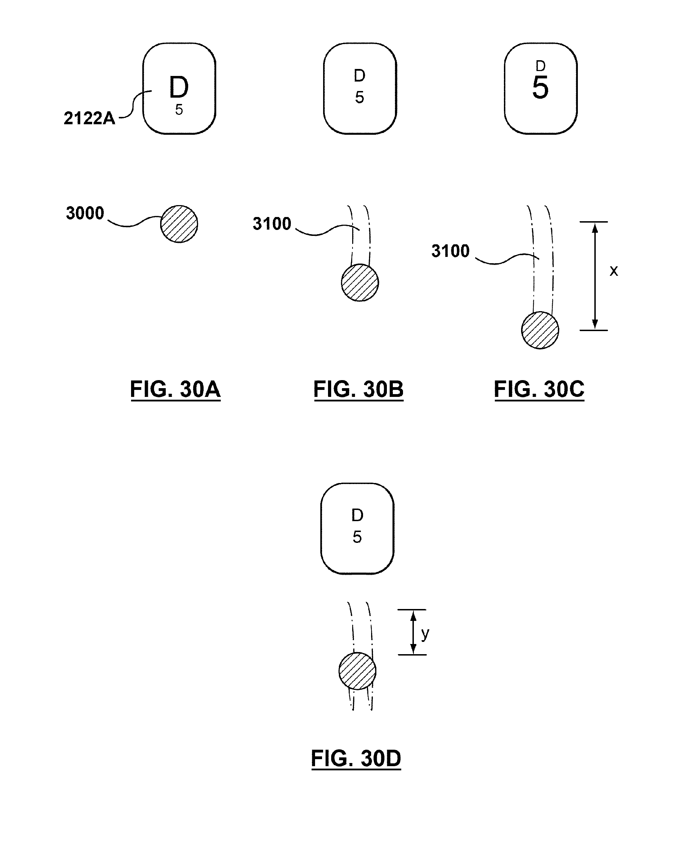

Referring now to Fig. 30A to 34, visual cues for transitioning the virtual keyboard between input states will be described. In some example embodiments, the predefined gesture for transitioning the virtual keyboard between input states may be a short touch event in which contact with the touch-sensitive display 118 lasts only as long as the flick of a finger or stylus. In other example embodiments, the touch input may be a longer touch event in which contact with the touch-sensitive display 118 is maintained as the user holds a finger or stylus on the touch-sensitive display 118 and gradually completes a swipe gesture. The device may provide visual cues of the predefined gesture which may trigger changing of the device input state, typically when longer touch events are used as the predefined gesture.

Figs. 30A-C show the example key 2122A in Figs. 26A-C in conjunction with a gradually completed swipe gesture. In Fig. 30A, the device is in the first input state and the "D" character from the first input character set is displayed larger and in the center of the key. In some examples, the "5" character from the second input character set is displayed smaller and below the centered "D" character before any contact with the touch-sensitive display 118 is detected as shown in Fig. 30A. In other examples, the character of the second input character set ("5") is not displayed until after the touch event is detected. The positioning of the character from the second input character set (e.g., "5") below the character from the first input character set provides a visual cue that a down swipe is the predefined gesture which can transition the device to the second input state, thereby providing access to the "5" character as an input.

A touch event detected by the touch-sensitive display 118 is represented by the circle 3000. The touch event has a contact area which may be any shape, such as the contact area of a user's finger or the tip of a stylus. For illustrative purposes, the shape of the contact area of the touch event is shown as the circle 3000.

In Fig. 30B, contact is maintained with the touch-sensitive display 118 and the touch event 3000 is moved downward. Trails 3100 show the path of the touch event 3000 from its initial contact position. The trails 3100 are for illustrative purposes only and are typically not necessarily displayed. In this example, the downward movement of the touch event 3000 corresponds to the direction of the predefined gesture. As the touch event 3000 moves downward, the character of the first input character set ("D") displayed on the example key 2122A gradually becomes less prominent, and the character of the second input character set ("5") gradually becomes more prominent similar to the examples described with respect to Fig. 26B. In some examples, this transitioning of the displayed character is a visual cue of the predefined gesture and provides visual feedback of progress towards the predefined gesture.

In Fig. 30C, the touch event 3000 has moved a distance x from the initial contact position to a current contact position. In some examples, this distance x corresponds to the length of the swipe gesture. In the example in Fig. 30C, the length of the swipe gesture is determined from a midpoint of the initial contact position to a midpoint of the current contact position. In other examples, the distance x may be determined from different points or using different measurements. As seen in Figs. 30B and 30C, the swipe gesture does not need to be entirely straight or perfectly vertical to be considered a vertical swipe (e.g., down swipe).

In some examples, when the touch event 3000 moves and completes a swipe gesture corresponding to the predefined gesture, the predefined gesture is detected and the device is automatically transitioned from the first input state to the second input state. In other words, in these examples, the device detects the predefined gesture has been input as soon as the swipe gesture has been sufficiently completed to correspond to the predefined gesture even before the contact with the touch-sensitive display 118 has ended.

In other examples, the predefined gesture is not detected until the contact with the touch-sensitive display 118 has ended. For example, in Fig. 30C, the touch event 3000 has moved a distance x as illustrated by the trails 3100. The length of the swipe gesture x is greater than the threshold distance (and therefore corresponds to the predefined gesture); however, the predefined gesture has not yet been detected. The character of the second input character set ("5") is displayed large and centered on the key. If the user lifts his or her finger and ends the touch event 3000 at this location, a swipe gesture in the downward direction having a length of x would be detected. This swipe gesture would correspond to the predefined gesture and the device would transition from the first input state to the second input state.

In some examples, before contact with the touch-sensitive display 118 ends, the touch event 3000 can be moved in the opposite direction to reverse the input motion as illustrated in Fig. 30D, for example, because the user decides not to transition the device to the second input state. For example, a user may move the contact point downwards to the position shown in Fig. 30C and, before releasing his or her finger, moves the touch event 3000 back upwards to the position seen in Fig. 30D. As the touch event 3000 is moved upwards, the character of the second input character ("5") becomes less prominent and the character of the first input character ("D") becomes more prominent on the displayed key.

If the contact is released at the position illustrated in Fig. 30D, the detected touch input, in some examples, would be a short downward swipe having a length measured from the initial contact position to the final position at which contact was released. If this distance is less than the threshold distance to correspond to the predefined gesture, the device will remain in the first input state.

In other examples, if the contact is released at the position illustrated in Fig. 30D, the detected touch input will be an downward swipe followed by an upward swipe. If the predefined gesture is a downward swipe, the detected down-up motion will not correspond to the predefined gesture and the device will remain in the first input state.

Upon determining that the device will remain in the first input state, the example key 2122A may return to displaying the associated characters in the format seen in Fig. 30A, or to the default state shown in Fig. 21 in examples in which the character of the second input character set is not displayed until after the touch event is detected.

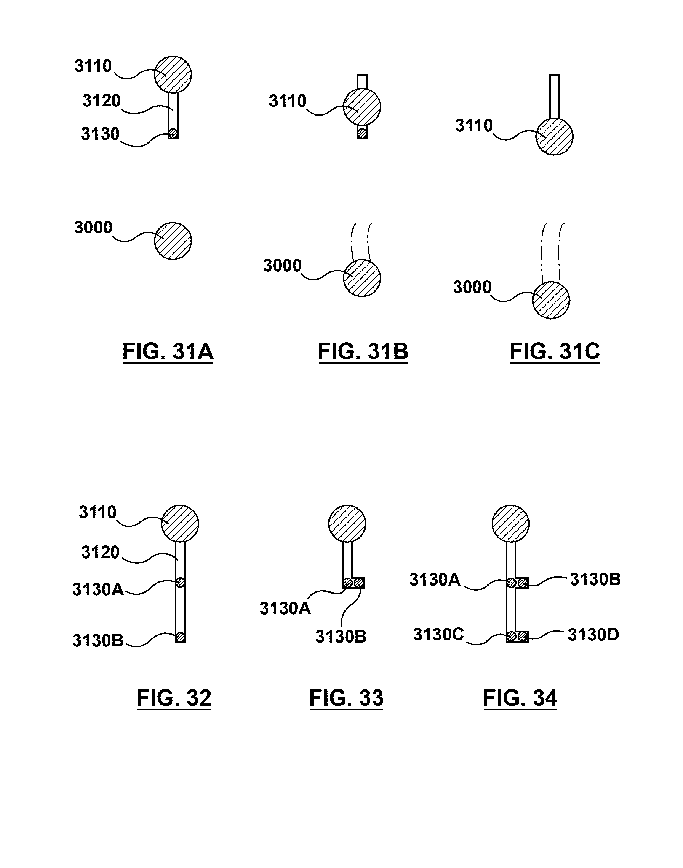

Figs. 31A-C illustrate another example of a visual cue of the predefined gesture which provides visual feedback of progress towards the predefined gesture. In Fig. 31A, a maintained contact is detected on the touch-sensitive display 118 at touch event 3000 similar to Fig. 30A. A visual cue of the predefined gesture is displayed in the form of image 3110, path 3120 and end point 3130. In some examples, the relative position of the image 3110 on the path 3120 provides visual feedback of the progress towards the predefined gesture which is completed at end point 3130. As the touch event 3000 is moved downwards as seen in Fig. 31B, the image 3110 moves downwards along path 3120. As the touch event 3000 moves further as seen in Fig. 31C, the image 3110 moves downwards and reaches end point 3130.

In some examples, reaching the end point may result in the detection of a touch input which corresponds to the predefined gesture. In other examples, the detection of the touch input does not occur until contact with the touch-sensitive display 118 is released.

In some examples, the image 3110, path 3120 and end point 3130 are displayed proximate to the initial contact point. In some examples, the image 3110 is displayed on, or at, the initial contact point and moves as the touch event 3000 moves. In other examples, the image 3110, path 3120 and end point 3130 are displayed in the middle of the display 112. In other examples, the image 3110, path 3120 and end point 3130 are displayed at a different predefined position on the display 112. In other examples, no end point 3130 is displayed and the visual cue is provided only by the image 3110 and the path 3120.

Figure 32 shows another example of a visual cue of the predefined gesture which provides visual feedback of progress towards the predefined gesture. The predefined gesture has two endpoints 3130A and 3130B. In this example, releasing contact with the touch-sensitive display 118 (i.e., ending the touch event 3000) when the image is at or near the first end point 3130A will transition the device from the first input state to the second input state, and releasing the contact point when the image is at or near the second end point 3130B will transition the device from the first input state to the third input state.

Figure 33 shows another example of a visual cue of the predefined gesture which provides visual feedback of progress towards the predefined gesture. The predefined gesture has two endpoints 3130A and 3130B. In this example, releasing contact with the touch-sensitive display 118 (i.e., ending the touch event 3000) when the image is at or near the first end point 3130A will transition the device from the first input state to the second input state until a single character input is received at which point the device automatically transitions the device back to the first input state. Releasing contact with the touch-sensitive display 118 (i.e., ending the touch event 3000) when the image is at or near the second end point 3130B will transition the device from the first input state to the second input state wherein the device remains in the second input state until further input to transition the input state is received.

Figure 34 shows another example of a visual cue of the predefined gesture which provides visual feedback of progress towards the predefined gesture. The predefined gesture has four endpoints 3130A, 3130B, 3130C and 3130D. In this example, releasing contact with the touch-sensitive display 118 (i.e., ending the touch event 3000) when the image is at or near endpoints 3130A or 3130B will have the same effect as described for Fig. 33. Releasing the contact point when the image is at or near the first end point 3130C will transition the device from the first input state to the third input state until a single character input is received at which point the device automatically transitions the device back to the first input state. Releasing contact with the touch-sensitive display 118 (i.e., ending the touch event 3000) when the image is at or near the end point 3130D will transition the device from the first input state to the third input state wherein the device remains in the third input state until further input to transition the input state is received.

The visual cues described above are examples only. Any type of visual cue including different endpoints, paths, images, displayed character transitions, or any other number or combination of visual cues is also possible.

While the various methods of the present disclosure have been described in terms of functions shown as separate blocks in the Figures, the functions of the various blocks may be combined during processing on an electronic device. Furthermore, some of the functional blocks in the Figures may be separated into one or more sub steps during processing on an electronic device.

While the present disclosure is described, at least in part, in terms of methods, a person of ordinary skill in the art will understand that the present disclosure is also directed to the various components for performing at least some of the aspects and features of the described methods, be it by way of hardware components, software or any combination of the two, or in any other manner. Moreover, the present disclosure is also directed to a pre-recorded storage device or other similar computer readable medium including program instructions stored thereon for performing the methods described herein.

The present disclosure may be embodied in other specific forms without departing from the subject matter of the claims. The described example embodiments are to be considered in all respects as being only illustrative and not restrictive. The present disclosure intends to cover and embrace all suitable changes in technology. The scope of the present disclosure is, therefore, described by the appended claims rather than by the foregoing description. All changes that come within the meaning and range of equivalency of the claims are intended to be embraced within their scope.

## Claims

1. A method of changing input states on an electronic device, the method comprising:
displaying a virtual keyboard on a touch-sensitive display, wherein the virtual keyboard includes a first input character set when the device is in a first input state;
transitioning the device to a second input state when touch input corresponding to a predefined gesture is detected when the device is in the first input state, wherein in the second input state, the virtual keyboard includes a second input character set different from the first input character set.

2. The method of claim 1, further comprising:
transitioning the device from the second input state to the first input state in response to detecting a character input received by the virtual keyboard when the device is in the second input state.

3. The method of claim 1 or claim 2, wherein, when the touch input corresponds to a first predefined gesture, the device is transitioned to the second input state until a detection of a character input, after which the device is automatically transitioned from the second input state to the first input state; and
wherein, when the touch input corresponds to a second predefined gesture, the device is transitioned to the second input state until input to transition the device to a new input state is received.

4. The method of any one of claims 1 to 3, further comprising:
transitioning the device from the second input state to a third input state when touch input corresponding to a further predefined gesture is detected when the device is in the second input state, wherein in the third input state, the virtual keyboard includes a third input character set different from the first input character set and second input character set.

5. The method of claim 4, wherein the predefined gesture and further predefined gesture are the same.

6. The method of any one of claims 1 to 5, further comprising:
transitioning the device from the first input state to a third input state when touch input corresponding to a further predefined gesture is detected when the device is in the first input state, wherein in the third input state, the virtual keyboard includes a third input character set different from the first input character set and second input character set.

7. The method of claim 6, wherein the predefined gesture and further predefined gesture are different.

8. The method of any one of claims 1 to 7, wherein, when a character in the first input character set and a character in the second input character set are both associated with a particular key on the virtual keyboard, the character in the first input character set and the character in the second input character set are both displayed on the particular key;
wherein, when the device is in the first input state, the character in the first input character set is displayed on the particular key more prominently than the character in the second input character set.

9. The method of claim 8, wherein, when the device is in the second input state, the character in the second input character set is displayed on the particular key more prominently than the character in the first input character set.

10. The method of claim 8 or claim 9, wherein, when the predefined gesture is a swipe gesture in a particular direction, when the device is in the first input state, the character in the second input character set is displayed offset from the character in the first input character set in the particular direction of the swipe gesture.

11. The method of claim 10, wherein, when the predefined gesture is a downward swipe, when the device is in the first input state, the character in the second input character set is displayed below the character in the first input character set.

12. The method of any one of claims 1 to 11, wherein a first predefined gesture transitions the device from the first input state to a second input state, wherein the first predefined gesture is a swipe gesture in a first direction;
wherein the method further comprises:
selecting a predicted set of characters displayed on the display when a second predefined gesture is detected, wherein the predicted set of characters is generated in accordance with an input of a character from the virtual keyboard, wherein the second predefined gesture is a swipe gesture in a second direction opposite to the first direction.

13. The method of claim 12, wherein the first predefined gesture is a downward swipe and the second predefined gesture is an upward swipe.

14. The method of any one of claims 1 to 13, wherein the first input character set comprises alphabetic characters; wherein the second input character set comprises numeric characters, symbols, punctuation or emoticons, or the second input character set comprises characters from a different language than the characters in the first input character set.

15. An electronic device, comprising:
a touch-sensitive display;
a processor coupled to the touch-sensitive display, wherein the processor is configured to perform the method of any one of claims 1 to 14.
